# EUROPEAN PATENT APPLICATION

(11) **EP 4 810 452 A1**
(43) Date of publication of application: **23.09.2026**
(21) Application number: 24891503.5
(22) Date of filing: 15.11.2024
(51) Int. Cl.: C04B 24/26, C04B 14/10, C04B 28/02, C08L 71/00, C08L 101/02

(54) **USE OF DISPERSANT IN CLAY-CONTAINING HYDRAULIC COMPOSITION**

(30) Priority: 17.11.2023 JP 2023195632
(71) Applicant: Kao Corporation, Tokyo 103-8210 (JP)
(72) Inventor: TANAKA Shunya, Tokyo 103-8210 (JP); SASHIHARA Yoshiaki, Tokyo 103-8210 (JP)
(74) Representative: Hoffmann Eitle
(86) International application number: PCT/JP2024/040650
(87) International publication number: WO 2025/105468

(57) **Abstract**

The present invention provides a polycarboxylic acid-based dispersant for a hydraulic composition, the dispersant being capable of imparting excellent flow retention performance to a hydraulic composition even when the hydraulic composition contains clay. The dispersant used is a dispersant for a clay-containing hydraulic composition containing component (A) and component (B), wherein components (A) and (B) are specific copolymers different from each other, and the ratio of the content of component (A) to the total content of components (A) and (B) is 1 mass^{®} or more.

## Description

### Field of the Invention

The present invention relates to use of a dispersant in a clay-containing hydraulic composition. Further, the present invention relates to a clay-containing hydraulic composition containing the dispersant and a method for producing the clay-containing hydraulic composition.

### Background of the Invention

Naphthalene-based admixtures, melamine-based admixtures, aminosulfonic acid-based admixtures, polycarboxylic acid-based admixtures, and other admixtures are used to impart flowability to hydraulic compositions such as concrete and the like. Admixtures such as dispersants and the like are required to have various properties, such as the ability to impart flowability to hydraulic compositions, the ability to retain flowability (hereinafter also referred to as flow retention performance), the ability to prevent setting retardation, and the like. Improvements in polycarboxylic acid-based admixtures (dispersants) have also been proposed from such viewpoints.

When added to a hydraulic composition, a polycarboxylic acid-based dispersant yields higher hardened-product strength per unit amount of the dispersant added than does a naphthalene-based dispersant or the like; however, it is more susceptible to the influence of a clay component contained in the aggregate. In general, a polycarboxylic acid-based dispersant tends to cause the initial flowability and flow retention performance of a hydraulic composition to vary depending on the clay content in the aggregate.

The clay content of aggregate used for a hydraulic composition such as concrete, mortar, or the like varies depending on the quarry from which the aggregate is obtained. In addition, concrete plants and the like often use various types of aggregates obtained from different quarries in combination; therefore, in practice, the clay content of the aggregate varies. In a hydraulic composition such as concrete, mortar, or the like, aggregate accounts for a relatively large proportion per unit volume; thus, a polycarboxylic acid-based dispersant is susceptible to the influence of clay in the aggregate. As a result, workability may become unstable, and the addition amount of the dispersant required to obtain intended flowability and flow retention performance may also vary. In view of such issues, it has been proposed to use a plurality of polycarboxylic acid-based polymers in combination.

JP-A 2014-205607 discloses a dispersant for hydraulic compositions, the dispersant containing polymer (A) that satisfies the following:
(i) the polymer has only a structure derived from monomer (a), or has structures derived from monomer (a) and monomer (b), wherein monomer (a) is a vinyl monomer having a polyoxyalkylene chain, and monomer (b) is a vinyl monomer not having a polyoxyalkylene chain;
(ii) the weight ratio of monomer (a) to monomer (b), (a)/(b), is 50/50 to 100/0; and
(iii) monomer (a) includes a vinyl monomer having a polyoxyalkylene chain.

Further, JP-A 2022-18729 discloses a dispersant for a clay-containing hydraulic composition, the dispersant containing component (A), component (B), and component (C), wherein each of components (A), (B), and (C) is a copolymer of a carboxylic acid-based monomer and a carboxylic acid poly(ethylene glycol) ester-based monomer, and the copolymers are different from one another.

### Summary of the Invention

However, there have been few studies on improving the flow retention performance of clay-containing hydraulic compositions using existing polycarboxylic acid-based dispersants. Therefore, there has been a demand for development of a polycarboxylic acid-based dispersant capable of imparting excellent flow retention performance to clay-containing hydraulic compositions.

The present invention relates to use of a dispersant in a clay-containing hydraulic composition, the dispersant containing the following component (A) and the following component (B),
wherein the ratio of the content of component (A) to the total content of components (A) and (B) is 1 mass% or more:
<component (A)>
   a copolymer containing constituent unit (A1) represented by the following general formula (A1), constituent unit (A2) represented by the following general formula (A2), and constituent unit (A3) represented by the following general formula (A3),
   wherein the ratio of the content of constituent unit (A1) to the total content of constituent units (A1), (A2), and (A3), represented by: 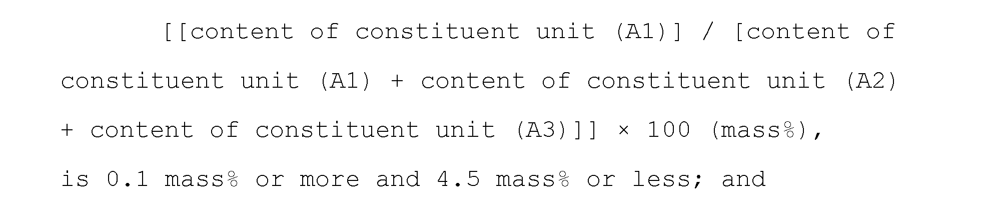 [[content of constituent unit (A1)] / [content of constituent unit (A1) + content of constituent unit (A2) + content of constituent unit (A3)]] × 100 (mass%), is 0.1 mass% or more and 4.5 mass% or less; and
   the copolymer has a weight-average molecular weight of 10,000 or more and 100,000 or less: 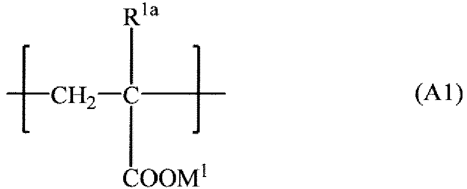 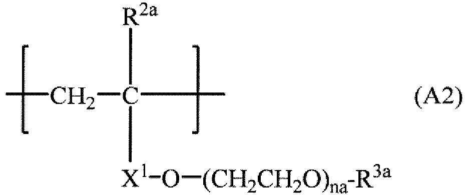 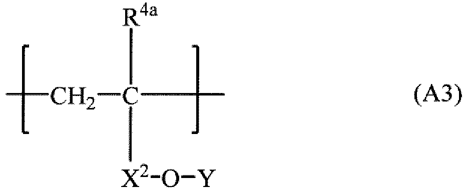
   wherein R^{1a}, R^{2a}, and R^{4a} are the same or different, and each represent a hydrogen atom or a methyl group;
   R^{3a} represents a hydrogen atom or an alkyl group having 1 or more and 3 or less carbons;
   M¹ represents one or more selected from a hydrogen atom and a countercation;
   X¹ and X² are the same or different, and each represent an alkylene group having 1 or more and 6 or less carbons, a direct bond, or a carbonyl group;
   na represents the average number of added moles of oxyethylene groups (-CH₂CH₂O-), the number being 100 or more and 150 or less; and
   Y represents an alkyl group having 1 or more and 6 or less carbons and/or a sulfo group; and
<component (B)>
   a copolymer containing constituent unit (B1) represented by the following general formula (B1) and constituent unit (B2) represented by the following general formula (B2),
   wherein the ratio of the content of constituent unit (B1) to the total content of constituent units (B1) and (B2), represented by: 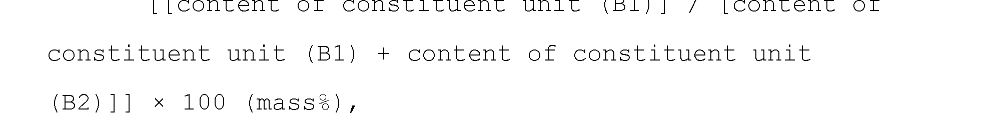 [[content of constituent unit (B1)] / [content of constituent unit (B1) + content of constituent unit (B2)]] × 100 (mass%), is 5 mass% or more and less than 30 mass%: 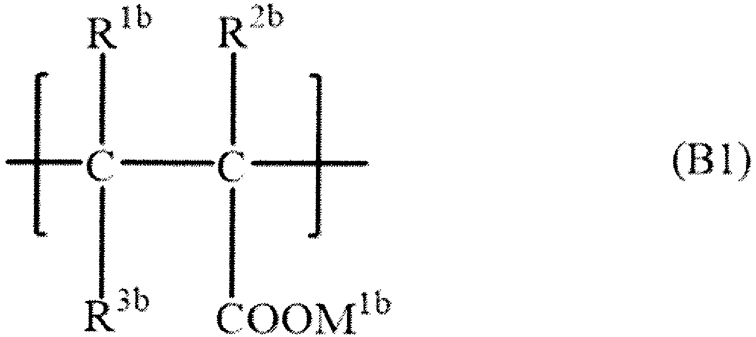
   wherein M^{1b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
   R^{1b}, R^{2b}, and R^{3b} are the same or different, and each represent a hydrogen atom, a methyl group, or a group represented by the following general formula (1):

      -(CH₂)ᵣCOOM^{2b} (1)
   wherein r represents 0, 1, or 2; and
   M^{2b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group,
   wherein -(CH₂)ᵣCOOM^{2b} (1) may bind to COOM^{1b} in the same or a different constituent unit to form an acid anhydride structure -(CH₂)ᵣC(=O)-O-C(=O)-, or may bind to -(CH₂)ᵣCOOM^{2b} in the same or a different constituent unit to form an acid anhydride structure -(CH₂)ᵣC(=O)-O-C(=O)(CH₂)ᵣ-, and in either case, neither M^{1b} nor M^{2b} is present; 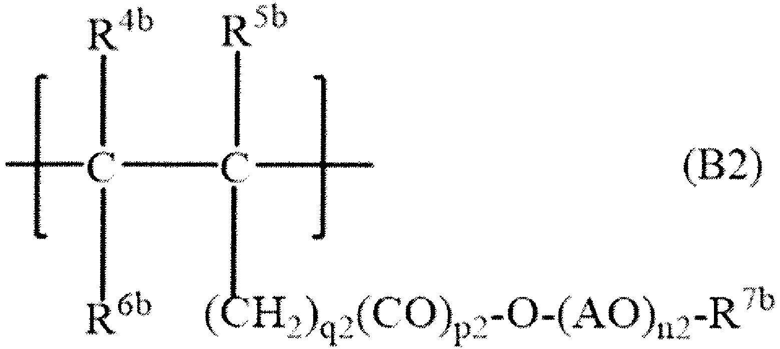
   wherein R^{4b} and R^{5b} are the same or different, and each represent a hydrogen atom or a methyl group;
   AO represents an oxyalkylene group having 2 or more and 4 or less carbons;
   q2 represents an integer of 0 or more and 6 or less;
   p2 represents 0 or 1;
   n2 represents the average number of added moles of AO, the number being 5 or more and 150 or less; and
   R^{6b} represents a hydrogen atom, a methyl group, a group represented by the following general formula (2), or a group represented by the following general formula (3):

      -(CH₂)ₛCOOM^{3b} (2)
   wherein s represents 0, 1, or 2; and
   M^{3b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; or

      - (CH₂)_{q2}(CO)ₚ₂O(AO)ₙ₂R^{7b} (3)
   wherein AO represents an oxyalkylene group having 2 or more and 4 or less carbons;
   q2 represents an integer of 0 or more and 6 or less;
   p2 represents 0 or 1;
   n2 represents the average number of added moles of AO, the number being 5 or more and 150 or less; and
   R^{7b} represents a hydrogen atom or an alkyl group having 1 or more and 4 or less carbons.

Further, the present invention relates to use of a dispersant in a clay-containing hydraulic composition, the dispersant containing a hydraulic powder, an aggregate, clay, water, the above component (A), and the above component (B),
wherein the ratio of the content of component (A) to the total content of components (A) and (B) is 1 mass% or more.

Further, the present invention relates to a method for producing a clay-containing hydraulic composition, including mixing a hydraulic powder, an aggregate, clay, water, the above component (A), and the above component (B),
wherein the ratio of the mixing amount of the clay to the mixing amount of the aggregate is 1 mass% or more and 5 mass% or less; and
the ratio of the content (parts by mass) of component (A) to the total content (parts by mass) of components (A) and (B) is 1 mass% or more.

Further, the present invention relates to use of a dispersant in a clay-containing hydraulic composition, the dispersant containing the above component (A).

According to the present invention, there is provided use of a polycarboxylic acid-based dispersant used in a clay-containing hydraulic composition, the dispersant being capable of imparting excellent flow retention performance to a clay-containing hydraulic composition. Further, according to the present invention, there are provided a clay-containing hydraulic composition containing a polycarboxylic acid-based dispersant used in a clay-containing hydraulic composition, the composition exhibiting excellent flow retention performance, and a method for producing the clay-containing hydraulic composition. Note that "excellent flow retention performance" means that the decrease in the initial flow value in a flow test is small even after the lapse of time.

### Embodiments of the Invention

### <Dispersant containing component (A) and component (B)>

The dispersant used in a clay-containing hydraulic composition of the present invention contains component (A) and component (B) in a predetermined ratio.

Component (A) is a copolymer containing constituent unit (A1) represented by the following general formula (A1), constituent unit (A2) represented by the following general formula (A2), and constituent unit (A3) represented by the following general formula (A3),
wherein the ratio of the content of constituent unit (A1) to the total content of constituent units (A1), (A2), and (A3), represented by: 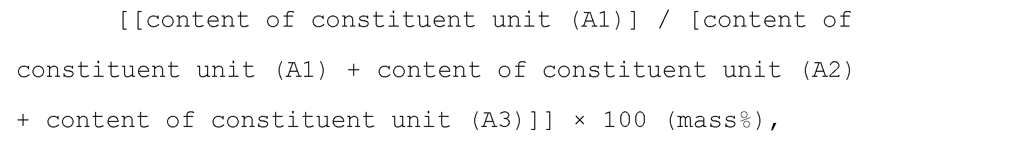 [[content of constituent unit (A1)] / [content of constituent unit (A1) + content of constituent unit (A2) + content of constituent unit (A3)]] × 100 (mass%) is 0.1 mass% or more and 4.5 mass% or less; and
the copolymer has a weight-average molecular weight of 10,000 or more and 100,000 or less: 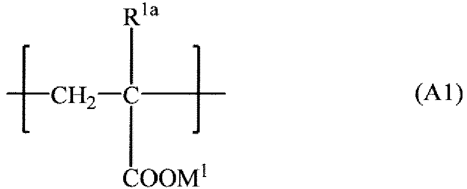 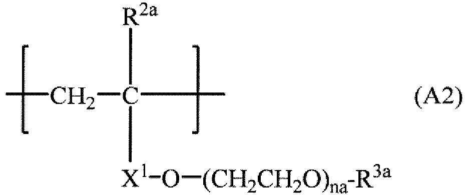 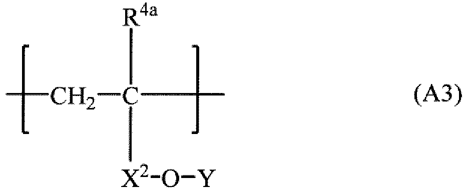
wherein R^{1a}, R^{2a}, and R^{4a} are the same or different, and each represent a hydrogen atom or a methyl group;
R^{3a} represents a hydrogen atom or an alkyl group having 1 or more and 3 or less carbons;
M¹ represents one or more selected from a hydrogen atom and a countercation;
X¹ and X² are the same or different, and each represent an alkylene group having 1 or more and 6 or less carbons, a direct bond, or a carbonyl group;
na represents the average number of added moles of oxyethylene groups (-CH₂CH₂O-), the number being 100 or more and 150 or less; and
Y represents an alkyl group having 1 or more and 6 or less carbons and/or a sulfo group.

First, constituent unit (A1) will be described.

In the formula (A1), M¹ represents one or more selected from a hydrogen atom, an alkali metal, an alkaline earth metal (1/2 atom), an ammonium group, an alkylammonium group, a substituted alkylammonium group, an alkyl group, a hydroxyalkyl group, and an alkenyl group. Examples of alkali metals may include sodium and potassium, and examples of alkaline earth metals may include magnesium. Further, examples of M¹ include ammonium, monoalkylammonium, dialkylammonium, trialkylammonium, and tetraalkylammonium (each alkyl group in the monoalkylammonium, dialkylammonium, and trialkylammonium has 2 or more and 8 or less carbons and may be substituted with one or more hydroxy groups), and the like. From the viewpoints of convenience and ready availability, the countercation is preferably an alkali metal, more preferably sodium.

The method for introducing constituent unit (A1) into component (A) is not particularly limited; however, it is preferable to polymerize, as a raw material, a monomer represented by the following general formula (A1'): 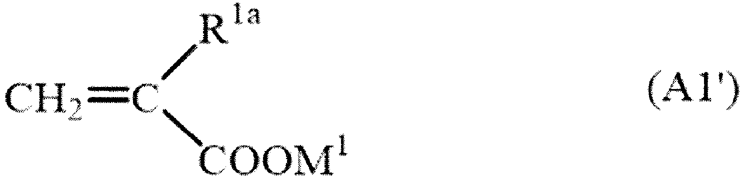 wherein R^{1a} and M¹ are as defined above.

When a monomer in which M¹ is a hydrogen atom is used as a raw material monomer for introducing constituent unit (A1), a countercation can be introduced by copolymerizing the monomer and thereafter neutralizing the carboxyl groups using a hydroxide of an alkali metal or an alkaline earth metal, ammonia, a monoalkylamine, a dialkylamine, or a trialkylamine (in which each alkyl group has 2 or more and 8 or less carbons and may be substituted with one or more hydroxy groups). Alternatively, the carboxyl groups may also be neutralized by exchanging the hydrogen atoms of the carboxyl groups with ammonium ions using a halide salt or a hydroxide salt of a monoalkylammonium, a dialkylammonium, a trialkylammonium, or a tetraalkylammonium (in which each alkyl group has 2 or more and 8 or less carbons and may be substituted with one or more hydroxy groups).

From the viewpoints of corrosion inhibition and safety, it is preferred that 20 to 95% of the hydrogen atoms of the carboxyl groups be neutralized.

Next, constituent unit (A2) will be described.

In the formula (A2), R^{2a} is preferably a methyl group from the viewpoint of favorable flow retention performance attributable to component (B). Further, X¹ is preferably a direct bond or a carbonyl group, more preferably a carbonyl group. In the formula (A2), na is preferably 100 or more, more preferably 110 or more, further preferably 120 or more, and preferably 150 or less, more preferably 140 or less, further preferably 130 or less, from the same viewpoint.

The method for introducing constituent unit (A2) into component (A) is not particularly limited; however, it is preferable to polymerize, as a raw material, a monomer represented by the following general formula (A2'): 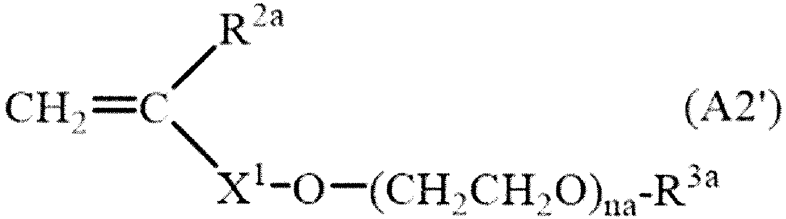 wherein R^{2a}, R^{3a}, X¹, and na are as defined above.

Monomer (A2') may be obtained using, for example, any of the following olefins.
(1) When X¹ is an alkylene group:
   a reaction product of ethylene oxide with allyl alcohol, isoprenyl alcohol, or methallyl alcohol.
(2) When X¹ is a direct bond:
   a monoether of polyethylene glycol with vinyl alcohol, allyl alcohol, isoprenyl alcohol, or methallyl alcohol; or
   an ether formed from an alkoxy polyethylene glycol capped with an alkyl group at one end and allyl alcohol, isoprenyl alcohol, or methallyl alcohol.
(3) When X¹ is a carbonyl group:
   a monoester of polyethylene glycol with acrylic acid or methacrylic acid;
   an ester formed from an alkoxy polyethylene glycol capped with an alkyl group at one end and acrylic acid or methacrylic acid; or
   a reaction product of ethylene oxide with acrylic acid or methacrylic acid.

Next, constituent unit (A3) will be described.

In the formula (A3), R^{4a} is preferably a methyl group from the viewpoint of favorable flow retention performance. Further, X² is preferably a direct bond or a carbonyl group, more preferably a carbonyl group. Y is preferably an alkyl group having 1 or more and 6 or less carbons.

The method for introducing constituent unit (A3) into component (A) is not particularly limited; however, it is preferable to polymerize, as a raw material, a monomer represented by the following general formula (A3'): 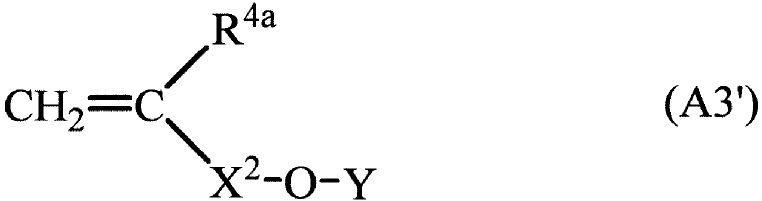 wherein R^{4a}, X², and Y are as defined above.

Monomer (A3') may be obtained using, for example, any of the following olefins.
(1) When X² is an alkylene group:
   an ether of an alcohol having 1 or more and 6 or less carbons with allyl alcohol, isoprenyl alcohol, or methallyl alcohol; or
   a sulfate ester of allyl alcohol, isoprenyl alcohol, or methallyl alcohol.
(2) When X² is a direct bond:
   an ether of an alcohol having 1 or more and 6 or less carbons with vinyl alcohol or 1-methylvinyl alcohol.
(3) When X² is a carbonyl group:
   a monoester of an alcohol having 1 or more and 6 or less carbons with acrylic acid or methacrylic acid.

In the copolymer of component (A), the ratio of the content of constituent unit (A1) to the total content of constituent units (A1), (A2), and (A3) is 0.1 mass% or more, preferably 0.2 mass% or more, from the viewpoint of favorable flow retention performance attributable to component (B), and 4.5 mass% or less, preferably 4 mass% or less, more preferably 3 mass% or less, further preferably 2.5 mass% or less, from the same viewpoint. This ratio is calculated by the following formula: As used herein, the ratio of each constituent unit may be 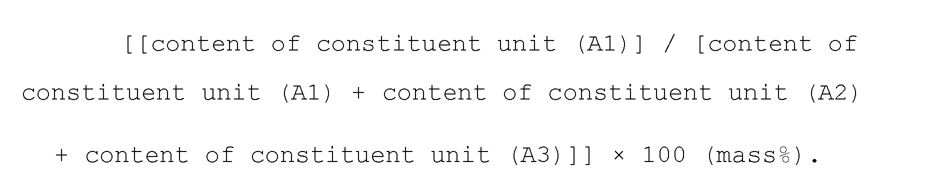[[content of constituent unit (A1)] / [content of constituent unit (A1) + content of constituent unit (A2) + content of constituent unit (A3)]] × 100 (mass%).the ratio of the raw material monomer from which the constituent unit in the copolymer is derived, i.e., the charging ratio of the raw material monomer used to produce the copolymer, and such ratio may be regarded as being equal to the ratio of the constituent unit contained in the copolymer. Further, the ratio of each constituent unit may be the average value of the ratios of that constituent unit contained in the overall copolymer.

In the copolymer of component (A), the ratio of the content of constituent unit (A2) to the total content of constituent units (A1), (A2), and (A3) is preferably 70 mass% or more, more preferably 80 mass% or more, from the viewpoint of favorable flow retention performance attributable to component (B), and preferably 95 mass% or less, more preferably 90 mass% or less, from the same viewpoint. This ratio is calculated by the following formula: 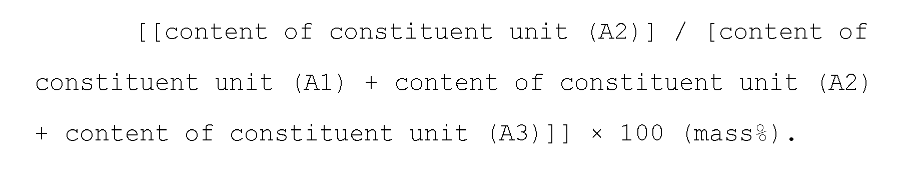 [[content of constituent unit (A2)] / [content of constituent unit (A1) + content of constituent unit (A2) + content of constituent unit (A3)]] × 100 (mass%).

In the copolymer of component (A), the ratio of the content of constituent unit (A3) to the total content of constituent units (A1), (A2), and (A3) is preferably 3 mass% or more, more preferably 5 mass% or more, from the viewpoint of favorable flow retention performance attributable to component (B), and preferably 30 mass% or less, more preferably 25 mass% or less, further preferably 20 mass% or less, furthermore preferably 15 mass% or less, from the same viewpoint. This ratio is calculated by the following formula: 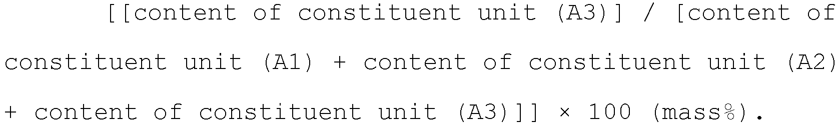 [[content of constituent unit (A3)] / [content of constituent unit (A1) + content of constituent unit (A2) + content of constituent unit (A3)]] × 100 (mass%).

The copolymer of component (A) may contain constituent units other than constituent units (A1), (A2), and (A3) [hereinafter referred to as constituent unit (A4)]. Examples of constituent unit (A4) may include constituent units introduced by copolymerizing one or more acrylic acid-based monomers selected from, for example, 2-(methacryloyloxy)ethyl phosphate, (2-hydroxyethyl) acrylate, (2-hydroxyethyl) methacrylate, methyl acrylate, ethyl acrylate, acrylonitrile, methallylsulfonic acid, acrylamide, methacrylamide, styrene, styrenesulfonic acid, di-[2-(1-methylvinylcarbonyl)ethyl] phosphate, di-[2-(vinylcarbonyl)ethyl] phosphate, [2-(1-methylvinylcarbonyl)ethyl] phosphate, phosphoric acid [2-(vinylcarbonyl)ethyl] acrylate ester, crotonic acid, maleic acid, fumaric acid, itaconic acid, citraconic acid, and the like. These acrylic acid-based monomers may be in the form of an alkali metal salt, an alkaline earth metal salt, an ammonium salt, or an amine salt, and may also be in the form of an acid anhydride such as maleic anhydride or the like.

The ratio of the total content of constituent units (A1), (A2), and (A3) to the total content of all constituent units of the copolymer of component (A) is preferably 80 mass% or more, more preferably 90 mass% or more, from the viewpoint of favorable flow retention performance attributable to component (B), and preferably 100 mass% or less, from the same viewpoint. This proportion is calculated by the following formula: 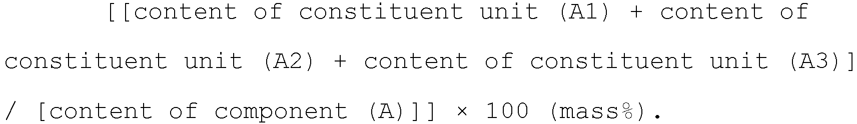 [[content of constituent unit (A1) + content of constituent unit (A2) + content of constituent unit (A3)] / [content of component (A)]] × 100 (mass%).

The copolymer of component (A) has a weight-average molecular weight of 10,000 or more, preferably 30,000 or more, from the viewpoint of favorable flow retention performance, and 100,000 or less, preferably 80,000 or less, from the same viewpoint. This weight-average molecular weight is measured by a high-speed GPC system (manufactured by Tosoh Corporation; HLC-8320GPC) under the following conditions: detector: RI; columns: G4000PWXL + G2500PWXL (anion); mobile phase: 0.2 M phosphate buffer / acetonitrile = 9/1; flow rate: 1.0 mL/min; column temperature: 40°C; and reference material: polyethylene glycol.

Component (B) is a copolymer containing constituent unit (B1) represented by the following general formula (B1) and constituent unit (B2) represented by the following general formula (B2), wherein the ratio of the content of constituent unit (B1) to the total content of constituent units (B1) and (B2) is 5 mass% or more and less than 30 mass%.

As described above, in component (B), the proportion of constituent unit (B1) is 5 mass% or more and less than 30 mass%, and it is considered that the carboxyl groups of constituent unit (B1) adsorb onto surfaces of hydraulic powder particles, thereby allowing the steric repulsion effect of the alkyleneoxy chains of constituent unit (B2) to suppress aggregation of the hydraulic powder particles, i.e., to impart dispersibility thereto.

However, when the hydraulic composition contains clay, it is presumed that the alkyleneoxy chains of constituent unit (B2) adsorb onto the clay and as a result, the steric repulsion effect of component (B) and the efficiency with which component (B) adsorbs onto the hydraulic powder particles decrease, leading to reduced dispersibility and reduced flow retention performance.

In the present invention, component (A), which adsorbs onto clay more readily than component (B), is further used in combination. It is presumed that, when the proportion of constituent unit (A1) in component (A) is 0.1 mass% or more and 4.5 mass% or less, the average number of added moles of oxyethylene groups in constituent unit (A2) is 100 or more and 150 or less, and constituent unit (A3) is further contained, component (A) can adsorb onto both the clay and the hydraulic powder particles to an appropriate extent, whereby adsorption of component (B) onto the clay is suppressed, the hydraulic powder particles are efficiently dispersed, and the hydraulic composition exhibits excellent flow retention performance. 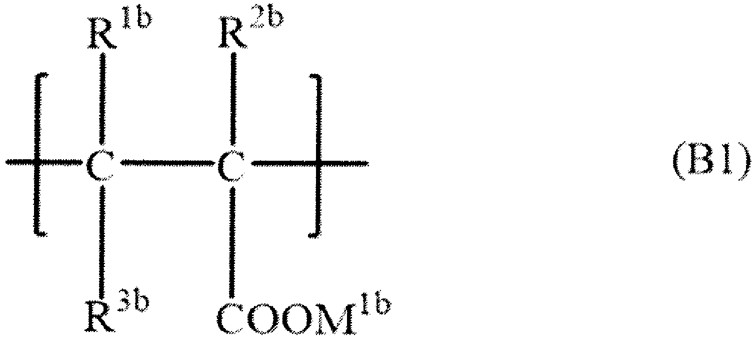
wherein M^{1b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
R^{1b}, R^{2b}, and R^{3b} are the same or different, and each represent a hydrogen atom, a methyl group, or a group represented by the following general formula (1):

   -(CH₂)ᵣCOOM^{2b} (1)
wherein r represents 0, 1, or 2; and
M^{2b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group,
wherein -(CH₂)ᵣCOOM^{2b} (1) may bind to COOM^{1b} in the same or a different constituent unit to form an acid anhydride structure -(CH₂)ᵣC(=O)-O-C(=O)-, or may bind to -(CH₂)ᵣCOOM^{2b} in the same or a different constituent unit to form an acid anhydride structure -(CH₂)ᵣC(=O)-O-C(=O)(CH₂)ᵣ-, and in either case, neither M^{1b} nor M^{2b} is present;

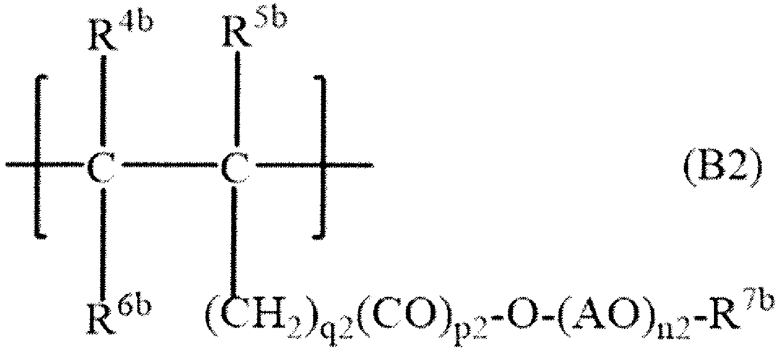

wherein R^{4b} and R^{5b} are the same or different, and each represent a hydrogen atom or a methyl group;
AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{6b} represents a hydrogen atom, a methyl group, a group represented by the following general formula (2), or a group represented by the following general formula (3):

   -(CH₂)ₛCOOM^{3b} (2)
wherein s represents 0, 1, or 2; and
M^{3b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; or

   - (CH₂)_{q2}(CO)ₚ₂O(AO)ₙ₂R^{7b} (3)
wherein AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{7b} represents a hydrogen atom or an alkyl group having 1 or more and 4 or less carbons.

First, constituent unit (B1) will be described.

In constituent unit (B1), M^{1b} represents one or more selected from a hydrogen atom, an alkali metal, an alkaline earth metal (1/2 atom), an ammonium group, an alkylammonium group, a substituted alkylammonium group, an alkyl group, a hydroxyalkyl group, and an alkenyl group. Examples of alkali metals may include sodium and potassium, and examples of alkaline earth metals may include magnesium. Further, examples of M^{1b} include ammonium, monoalkylammonium, dialkylammonium, trialkylammonium, and tetraalkylammonium (each alkyl group in the monoalkylammonium, dialkylammonium, and trialkylammonium has 2 or more and 8 or less carbons and may be substituted with one or more hydroxy groups), and the like. From the viewpoints of convenience and ready availability, the countercation is preferably an alkali metal, more preferably sodium.

From the viewpoint of favorable flow retention performance attributable to component (B), R^{1b} and R^{3b} in constituent unit (B1) are preferably hydrogen atoms. Further, R^{2b} is preferably a methyl group.

The method for introducing constituent unit (B1) into component (B) is not particularly limited; however, it is preferable to polymerize, as a raw material, a monomer represented by the following general formula (B1'): 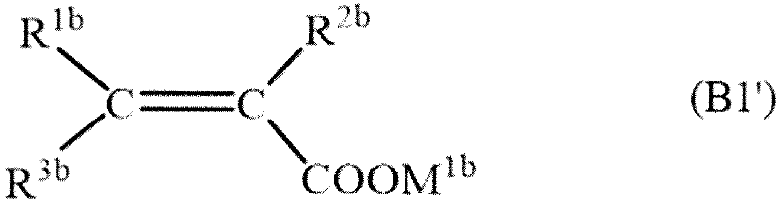 wherein M^{1b}, R^{1b}, R^{2b}, and R^{3b} are as defined above.

When olefin (B1') in which M^{1b} is a hydrogen atom is used as a raw material monomer for introducing constituent unit (B1), a countercation can be introduced by copolymerizing the monomer and thereafter neutralizing the carboxyl groups using a hydroxide of an alkali metal or an alkaline earth metal, ammonia, a monoalkylamine, a dialkylamine, or a trialkylamine (in which each alkyl group has 2 or more and 8 or less carbons and may be substituted with one or more hydroxy groups). Alternatively, the carboxyl groups may also be neutralized by exchanging the hydrogen atoms of the carboxyl groups with ammonium ions using a halide salt or a hydroxide salt of a monoalkylammonium, a dialkylammonium, a trialkylammonium, or a tetraalkylammonium (in which each alkyl group has 2 or more and 8 or less carbons and may be substituted with one or more hydroxy groups).
From the viewpoints of corrosion inhibition and safety, it is preferred that 20 to 95% of the hydrogen atoms of the carboxyl groups be neutralized.

Next, constituent unit (B2) will be described.

From the viewpoint of favorable flow retention performance attributable to component (B), R^{4b} and R^{6b} in constituent unit (B2) are preferably hydrogen atoms. Further, R^{5b} is preferably a methyl group.

Further, from the viewpoint of favorable flow retention performance attributable to component (B), it is preferred that, in constituent unit (B2), p2 and q2 be both 0, or q2 be 0 and p2 be 1.

In constituent unit (B2), na is preferably 5 or more, more preferably 10 or more, further preferably 20 or more, and preferably 150 or less, more preferably 140 or less, further preferably 100 or less, furthermore preferably 60 or less.

The method for introducing constituent unit (B2) into component (B) is not particularly limited; however, it is preferable to polymerize, as a raw material, a monomer represented by the following general formula (B2'): 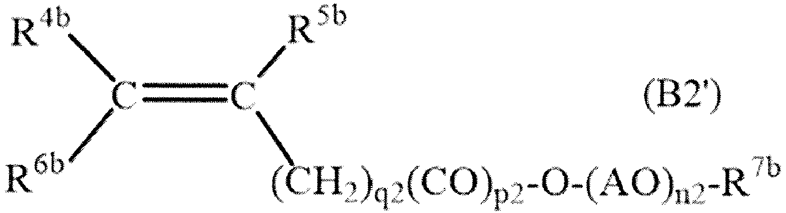 wherein R^{4b}, R^{5b}, AO, q2, p2, R^{6b}, n2, and R^{7b} are as defined above.

For example, any of the following monomers may be used for monomer (B2').
(1) When q2 is 1 or 2 and p2 is 0:
   a reaction product of alkylene oxide with allyl alcohol or methallyl alcohol.
(2) When q2 and p2 are both 0:
   a monoether of a polyalkylene glycol with vinyl alcohol, allyl alcohol, or methallyl alcohol; or
   an ether formed from an alkoxy polyalkylene glycol capped with an alkyl group at one end and allyl alcohol or methallyl alcohol.
(3) When q2 is 0 and p2 is 1:
   a monoester of a polyalkylene glycol with acrylic acid or methacrylic acid;
   an ester formed from an alkoxy polyalkylene glycol capped with an alkyl group at one end and acrylic acid or methacrylic acid; or
   a reaction product of alkylene oxide with acrylic acid or methacrylic acid.

The ratio of constituent unit (B1) to the total of constituent units (B1) and (B2) is 5 mass% or more, preferably 7 mass% or more, from the viewpoint of favorable flow retention performance of a hydraulic composition attributable to component (B), and 30 mass% or less, preferably 25 mass% or less, from the same viewpoint. This ratio is calculated by the following formula: 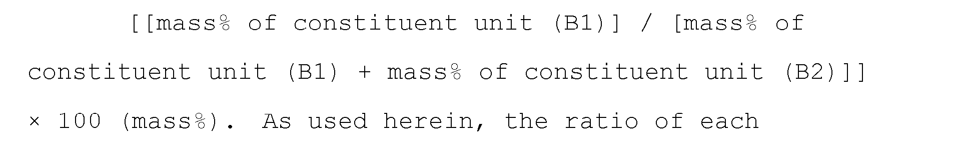 [[mass% of constituent unit (B1)] / [mass% of constituent unit (B1) + mass% of constituent unit (B2)]] × 100 (mass%).As used herein, the ratio of each constituent unit may be the ratio of the raw material monomer from which the constituent unit in the copolymer is derived, i.e., the charging ratio of the raw material monomer used to produce the copolymer, and such ratio may be regarded as being equal to the ratio of the constituent unit contained in the copolymer. Further, the ratio of each constituent unit may be the average value of the ratios of that constituent unit contained in the overall copolymer.

The copolymer of component (B) may contain constituent units other than constituent unit (B1) and constituent unit (B2) [hereinafter referred to as constituent unit (B3)]. Examples of constituent unit (B3) may include constituent units introduced by copolymerizing one or more acrylic acid-based monomers selected from, for example, 2-(methacryloyloxy)ethyl phosphate, (2-hydroxyethyl) acrylate, (2-hydroxyethyl) methacrylate, methyl acrylate, ethyl acrylate, acrylonitrile, methallylsulfonic acid, acrylamide, methacrylamide, styrene, styrenesulfonic acid, di-[2-(1-methylvinylcarbonyl)ethyl] phosphate, di-[2-(vinylcarbonyl)ethyl] phosphate, [2-(1-methylvinylcarbonyl)ethyl] phosphate, phosphoric acid [2-(vinylcarbonyl)ethyl] acrylate ester, crotonic acid, maleic acid, fumaric acid, itaconic acid, citraconic acid, and the like. These acrylic acid-based monomers may be in the form of an alkali metal salt, an alkaline earth metal salt, an ammonium salt, or an amine salt, and may also be in the form of an acid anhydride such as maleic anhydride or the like.

The ratio of the total content of constituent units (B1) and (B2) to the content of component (B) is preferably 80 mass% or more, more preferably 90 mass% or more, from the viewpoint of favorable flow retention performance attributable to component (B), and preferably 100 mass% or less, from the same viewpoint. This ratio is calculated by the following formula: 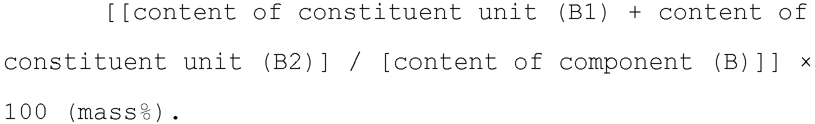 [[content of constituent unit (B1) + content of constituent unit (B2)] / [content of component (B)]] × 100 (mass%).

The copolymer of component (B) has a weight-average molecular weight of preferably 10,000 or more, more preferably 15,000 or more, from the viewpoint of favorable flow retention performance, and preferably 100,000 or less, more preferably 90,000 or less, from the same viewpoint. This weight-average molecular weight can be measured by the same method described above for component (A).

In the dispersant of the present invention, the ratio of the content of component (A) to the total content of components (A) and (B) is 1 mass% or more, preferably 2 mass% or more, from the viewpoint of favorable flow retention performance attributable to component (B), and preferably 5 mass% or less, more preferably 4 mass% or less, from the same viewpoint. Further, in the dispersant, the ratio of the content of component (A) to the total content of components (A) and (B) is preferably 5 mass% or more, from the viewpoint of favorable flow retention performance. This ratio (mass%) is calculated by the following formula: 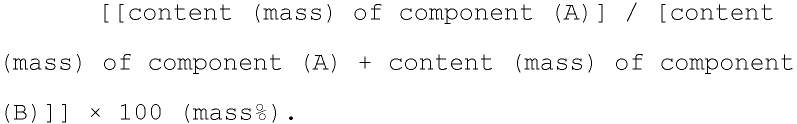 [[content (mass) of component (A)] / [content (mass) of component (A) + content (mass) of component (B)]] × 100 (mass%).

Optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under components (A) and (B)] may be blended into the dispersant of the present invention.

The dispersant of the present invention may contain water. The dispersant for a clay-containing hydraulic composition of the present invention may be a liquid composition.

In the dispersant of the present invention, the ratio of the total content of components (A) and (B) to the total amount of the dispersant excluding water is preferably 50 mass% or more, more preferably 70 mass% or more, from the viewpoint of obtaining flow retention performance, and preferably 100 mass% or less, more preferably 90 mass% or less, from the same viewpoints.

The dispersant for a clay-containing hydraulic composition of the present invention is used in a hydraulic composition containing clay. Examples of such clay include bentonite, montmorillonite, kaolinite, smectite, and the like. Further, examples include a mixture of two or more of these. The clay is, for example, carried into the hydraulic composition on a raw material used for producing the hydraulic composition, such as aggregate and the like. The clay is, for example, carried into the hydraulic composition on a raw material used for producing the hydraulic composition, such as aggregate and the like.

### <Clay-containing hydraulic composition>

The present invention provides a clay-containing hydraulic composition formed by blending a hydraulic powder, an aggregate, clay, water, and the above dispersant, wherein the ratio of the clay content to the aggregate content is 1 mass% or more and 5 mass% or less, and the ratio of the content of component (A) to the total content of components (A) and (B) is 1 mass% or more.

The matters described for the dispersant for a clay-containing hydraulic composition of the present invention may be applied, as appropriate, to the clay-containing hydraulic composition of the present invention. For example, specific examples and preferred embodiments and the like of component (A) and component (B) in the clay-containing hydraulic composition of the present invention are the same as those in the dispersant for a clay-containing hydraulic composition of the present invention. Further, a preferred range of the ratio of the content of component (A) to the total content of components (A) and (B) in the clay-containing hydraulic composition of the present invention is also the same as that in the dispersant for a clay-containing hydraulic composition of the present invention.

In the clay-containing hydraulic composition of the present invention, the ratio of the blending amount of component (A) to the total blending amount of components (A) and (B) is preferably 1 mass% or more, more preferably 2 mass% or more, from the viewpoint of favorable flow retention performance attributable to component (B), and preferably 5 mass% or less, more preferably 4 mass% or less, from the same viewpoint. Further, in the dispersant, the ratio of the content of component (A) to the total content of components (A) and (B) is preferably 5 mass% or more, from the viewpoint of favorable flow retention performance. The above ratio based on the blending amounts is calculated by the following formula: 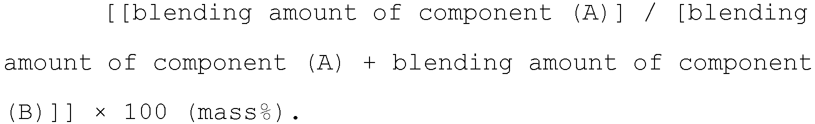 [[blending amount of component (A)] / [blending amount of component (A) + blending amount of component (B)]] × 100 (mass%).

Here, "hydraulic powder" refers to a powder capable of hardening by hydration, and examples thereof include cement, gypsum, and the like. Preferably, cements such as ordinary Portland cement, belite cement, moderate-heat cement, high-early-strength cement, ultrahigh-early-strength cement, sulfate-resisting cement, and the like are used. Alternatively, blast furnace slag cement, fly ash cement, silica fume cement, and the like may also be used. Such cements may be obtained by adding, to the above-listed cements, powders having pozzolanic activity and/or latent hydraulicity, such as blast furnace slag, fly ash, silica fume, and the like, as well as stone powder (calcium carbonate powder) and the like. Here, when the hydraulic powder contains, in addition to a powder capable of hardening by hydration such as cement and the like, one or more powders selected from a pozzolanic powder, a latent hydraulic powder, and stone powder (calcium carbonate powder), the amounts of such powders are also included in the amount of the hydraulic powder in the present invention. Further, when the powder capable of hardening by hydration contains a high-strength admixture, the amount of the high-strength admixture is also included in the amount of the hydraulic powder. The same applies to parts by mass, mass ratios, and the like in which the mass of the hydraulic powder is relevant.

Aggregate includes aggregate selected from fine aggregate and coarse aggregate. Examples of fine aggregate include those specified in No. 2311 of JIS A 0203:2014. Examples of fine aggregate include river sand, land sand, mountain sand, sea sand, lime sand, silica sand, and crushed sand derived therefrom; blast furnace slag fine aggregate; ferronickel slag fine aggregate; lightweight fine aggregate (artificial and natural); recycled fine aggregate; and the like. Further, examples of coarse aggregate include those specified in No. 2312 of JIS A 0203:2014. Examples of coarse aggregate include, for example, river gravel, land gravel, mountain gravel, sea gravel, lime gravel, and crushed stone derived therefrom; blast furnace slag coarse aggregate; ferronickel slag coarse aggregate; lightweight coarse aggregate (artificial and natural); recycled coarse aggregate; and the like. Fine aggregate and coarse aggregate may be used in combination of two or more different types or may each be used alone.

In general, when a clay component is carried into concrete or mortar, it is necessary to increase the addition amount of a dispersant. Increasing the addition amount of a dispersant may cause problems such as increased cost, setting retardation, decreased strength, increased bleeding, and aggregate settlement immediately after mixing. However, due to the recent deterioration in aggregate quality, the use of aggregate with clay adhering thereto may sometimes be unavoidable.

The dispersant of the present invention can impart excellent flow retention performance to the hydraulic composition even when the aggregate used therein has a ratio of clay content to aggregate content of, for example, 0.03 mass% or more, or 0.1 mass% or more, further 0.5 mass% or more, and, for example, 5 mass% or less, or 4 mass% or less, further 3 mass% or less. Note that, in the present invention, the bentonite content in the aggregate measured in accordance with JIS Z 2451:2019 (spot method) may be used as the clay content in the aggregate. This ratio can be calculated by the following formula: 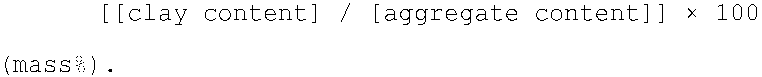 [[clay content] / [aggregate content]] × 100 (mass%).

In the clay-containing hydraulic composition of the present invention, the ratio of the blending amount of component (A) to the clay content is preferably 0.25 mass% or more, more preferably 0.3 mass% or more, further preferably 0.4 mass% or more, from the viewpoint of favorable flow retention performance attributable to component (B), and preferably 5 mass% or less, more preferably 4 mass% or less, further preferably 3 mass% or less, from the same viewpoint. This ratio can be calculated by the following formula: 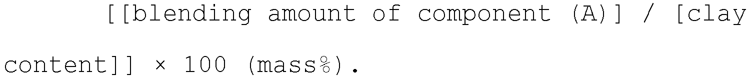 [[blending amount of component (A)] / [clay content]] × 100 (mass%).

In the clay-containing hydraulic composition of the present invention, the ratio of the blending amount of component (B) to the clay content is preferably 0.25 mass% or more, more preferably 0.3 mass% or more, further preferably 0.4 mass% or more, from the viewpoint of favorable flow retention performance attributable to component (B), and preferably 50 mass% or less, more preferably 40 mass% or less, further preferably 30 mass% or less, from the same viewpoint. This ratio can be calculated by the following formula: 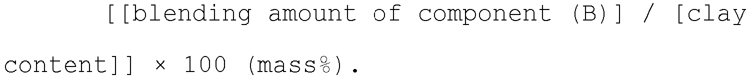 [[blending amount of component (B)] / [clay content]] × 100 (mass%).

In the clay-containing hydraulic composition of the present invention, the ratio of the total content of components (A) and (B) to the clay content is preferably 0.25 mass% or more, more preferably 0.3 mass% or more, further preferably 0.4 mass% or more, from the viewpoint of favorable flow retention performance attributable to component (B), and preferably 50 mass% or less, more preferably 40 mass% or less, further preferably 30 mass% or less, from the same viewpoint. This ratio can be calculated by the following formula: 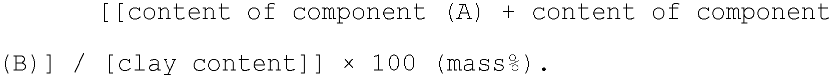 [[content of component (A) + content of component (B)] / [clay content]] × 100 (mass%).

In the clay-containing hydraulic composition of the present invention, the ratio of the blending amount of component (A) to the blending amount of the hydraulic powder is preferably 0.01 mass% or more, more preferably 0.015 mass% or more, furthermore preferably 0.02 mass% or more, from the viewpoint of favorable flow retention performance attributable to component (B), and preferably 0.25 mass% or less, more preferably 0.2 mass% or less, furthermore preferably 0.15 mass% or less, from the same viewpoint. This ratio can be calculated by the following formula: 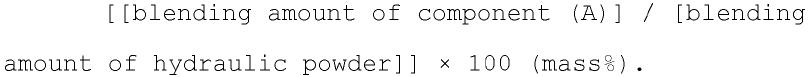 [[blending amount of component (A)] / [blending amount of hydraulic powder]] × 100 (mass%).

In the clay-containing hydraulic composition of the present invention, the ratio of the blending amount of component (B) to the blending amount of the hydraulic powder is preferably 0.05 mass% or more, more preferably 0.075 mass% or more, further preferably 0.1 mass% or more, from the viewpoint of favorable flow retention performance, and preferably 0.5 mass% or less, more preferably 0.4 mass% or less, further preferably 0.3 mass% or less, from the same viewpoint. This ratio can be calculated by the following formula: 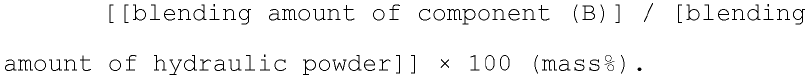 [[blending amount of component (B)] / [blending amount of hydraulic powder]] × 100 (mass%).

Further, in the clay-containing hydraulic composition of the present invention, the ratio of the total blending amount of components (A) and (B) to the blending amount of the hydraulic powder is preferably 0.1 mass% or more, more preferably 0.15 mass% or more, further preferably 0.2 mass% or more, from the viewpoint of favorable flow retention performance attributable to component (B), and preferably 0.5 mass% or less, more preferably 0.4 mass% or less, further preferably 0.35 mass% or less, from the same viewpoint. This ratio can be calculated by the following formula: 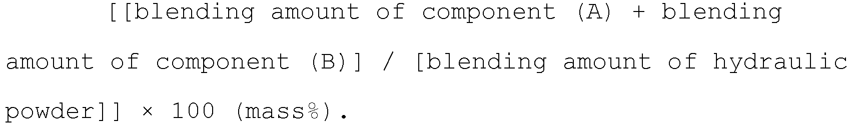 [[blending amount of component (A) + blending amount of component (B)] / [blending amount of hydraulic powder]] × 100 (mass%).

In the clay-containing hydraulic composition of the present invention, the water/hydraulic powder ratio [which is the mass percentage (mass%) of water relative to hydraulic powder in a slurry and is commonly abbreviated as W/P or abbreviated as W/C when the hydraulic powder is cement] is preferably 15% or more, more preferably 25% or more, from the viewpoints of strength development and workability, and preferably 70% or less, more preferably 50% or less, from the same viewpoints.

When the clay-containing hydraulic composition is concrete, the amount of coarse aggregate used, expressed as bulk volume, is preferably 50% or more, more preferably 55% or more, further preferably 60% or more, from the viewpoints of strength development of the hydraulic composition, reducing the amount of hydraulic powder such as cement and the like used, and improving fillability into formwork and the like, and preferably 100% or less, more preferably 90% or less, further preferably 80% or less, from the same viewpoints. "Bulk volume" refers to the proportion of the volume (including voids) of coarse aggregate in 1 m³ of concrete.

Further, when the clay-containing hydraulic composition is concrete, the amount of fine aggregate used is preferably 500 kg/m³ or more, more preferably 600 kg/m³ or more, further preferably 700 kg/m³ or more, from the viewpoint of improving fillability into formwork and the like, and preferably 1,000 kg/m³ or less, more preferably 900 kg/m³ or less, from the same viewpoint.

When the clay-containing hydraulic composition is mortar, the amount of fine aggregate used is preferably 800 kg/m³ or more, more preferably 900 kg/m³ or more, further preferably 1,000 kg/m³ or more, from the viewpoint of improving fillability into formwork and the like, and preferably 2,000 kg/m³ or less, more preferably 1,800 kg/m³ or less, further preferably 1,700 kg/m³ or less, from the same viewpoint.

Optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under components (A) and (B)] may be blended into the clay-containing hydraulic composition of the present invention.

A hardened product can be obtained by curing the clay-containing hydraulic composition of the present invention by a known method. The hydraulic composition may be cured in consideration of the intended use, shape, and the like of the hardened product.

### <Method for producing clay-containing hydraulic composition>

The present invention provides a method for producing a clay-containing hydraulic composition, including mixing a hydraulic powder, an aggregate, clay, water, the above component (A), and the above component (B),
wherein the ratio of the mixing amount of the clay to the mixing amount of the aggregate is 1 mass% or more and 5 mass% or less; and
the ratio of the mixing amount of component (A) to the total mixing amount of components (A) and (B) is 1 mass% or more.

The matters described for the dispersant and the clay-containing hydraulic composition of the present invention may be applied, as appropriate, to the method for producing a clay-containing hydraulic composition of the present invention. Specific examples, preferred embodiments, and the like of hydraulic powder, aggregate, clay, component (A), component (B), and optional components used in the method for producing a clay-containing hydraulic composition of the present invention are the same as those in the dispersant for a hydraulic composition and the hydraulic composition of the present invention. Further, the preferred ranges described above for the contents of the respective components in the dispersant for a clay-containing hydraulic composition of the present invention and in the clay-containing hydraulic composition of the present invention may be applied to the method for producing a clay-containing hydraulic composition of the present invention by replacing the contents with mixing amounts.

In the method for producing a clay-containing hydraulic composition of the present invention, the ratio of the mixing amount of component (A) to the total mixing amount of components (A) and (B) is preferably 1 mass% or more, more preferably 2 mass% or more, from the viewpoints of adsorption to clay and suppression of heteroaggregation, and preferably 5 mass% or less, more preferably 4 mass% or less, from the same viewpoints. Further, in the dispersant, the ratio of the content of component (A) to the total content of components (A) and (B) is preferably 5 mass% or more, more preferably 5 mass% or more, from the viewpoint of favorable flow retention performance. The above ratio based on the mixing amounts is calculated by the following formula: 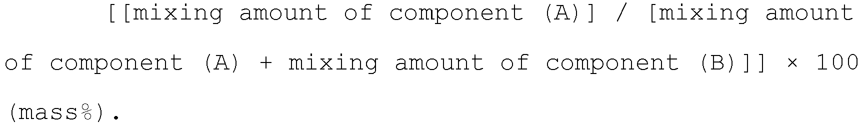 [[mixing amount of component (A)] / [mixing amount of component (A) + mixing amount of component (B)]] × 100 (mass%).

The method for producing a clay-containing hydraulic composition of the present invention is not limited by the order in which the components are mixed. However, examples of simpler and more effective methods include mixing the hydraulic powder with the aggregate containing clay, and then mixing the resulting mixture with a mixing liquid containing components (A) and (B) and water. Examples of such a method include mixing the hydraulic powder, coarse aggregate, and fine aggregate for a predetermined time, for example, for 5 seconds or more and 60 seconds or less, and then mixing the resulting mixture with a mixing liquid containing components (A) and (B) and water. Mixing can be performed using a known mixer. The mixing liquid may be an aqueous solution or an aqueous suspension.

In the method for producing a clay-containing hydraulic composition of the present invention, component (A) and component (B) can be mixed in amounts falling within the ranges described for the clay-containing hydraulic composition of the present invention, based on the amount of the hydraulic powder.

Specifically, in the method for producing a clay-containing hydraulic composition of the present invention, the ratio of the mixing amount of component (A) to the blending amount of the hydraulic powder is preferably 0.01 mass% or more, more preferably 0.015 mass% or more, furthermore preferably 0.02 mass% or more, and preferably 0.25 mass% or less, more preferably 0.2 mass% or less, further preferably 0.15 mass% or less.

Further, in the method for producing a clay-containing hydraulic composition of the present invention, the ratio of the mixing amount of component (B) to the blending amount of the hydraulic powder is preferably 0.05 mass% or more, more preferably 0.075 mass% or more, further preferably 0.1 mass% or more, and preferably 0.5 mass% or less, more preferably 0.4 mass% or less, further preferably 0.3 mass% or less.

Further, in the method for producing a clay-containing hydraulic composition of the present invention, the ratio of the total mixing amount of components (A) and (B) to the blending amount of the hydraulic powder is preferably 0.1 mass% or more, more preferably 0.15 mass% or more, furthermore preferably 0.2 mass% or more, and preferably 0.5 mass% or less, more preferably 0.4 mass% or less, furthermore preferably 0.3 mass% or less.

In the method for producing a clay-containing hydraulic composition of the present invention, optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under components (A) and (B)] may be mixed.

Further, in the method for producing a clay-containing hydraulic composition of the present invention, water and the hydraulic powder may be mixed such that the water/hydraulic powder ratio (mass%) is preferably 15% or more, more preferably 25% or more, from the viewpoint of workability, and preferably 70% or less, more preferably 50% or less, from the same viewpoint.

### <Use of dispersant containing component (A) in clay-containing hydraulic composition>

The present invention discloses use of a dispersant containing component (A) (also referred to as dispersant 2) in a clay-containing hydraulic composition.

Component (A) is a copolymer containing constituent unit (A1) represented by the following general formula (A1), constituent unit (A2) represented by the following general formula (A2), and constituent unit (A3) represented by the following general formula (A3),
wherein the ratio of the content of constituent unit (A1) to the total content of constituent units (A1), (A2), and (A3), represented by: 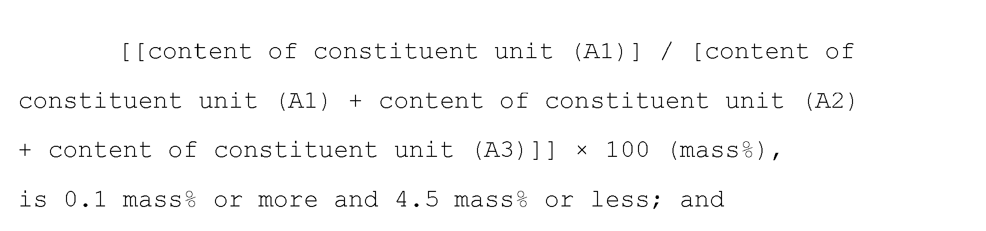 [[content of constituent unit (A1)] / [content of constituent unit (A1) + content of constituent unit (A2) + content of constituent unit (A3)]] × 100 (mass%), is 0.1 mass% or more and 4.5 mass% or less; and
the copolymer has a weight-average molecular weight of 10,000 or more and 100,000 or less: 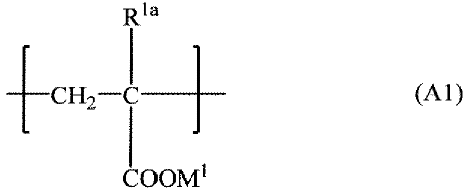 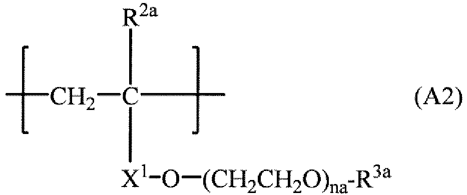 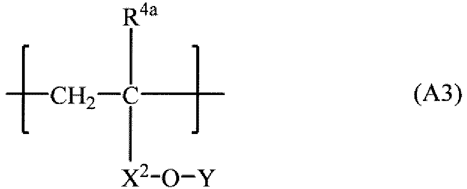
wherein R^{1a}, R^{2a}, and R^{4a} are the same or different, and each represent a hydrogen atom or a methyl group;
R^{3a} represents a hydrogen atom or an alkyl group having 1 or more and 3 or less carbons;
M¹ represents one or more selected from a hydrogen atom and a countercation;
X¹ and X² are the same or different, and each represent an alkylene group having 1 or more and 6 or less carbons, a direct bond, or a carbonyl group;
na represents the average number of added moles of oxyethylene groups (-CH₂CH₂O-), the number being 100 or more and 150 or less; and
Y represents an alkyl group having 1 or more and 6 or less carbons and/or a sulfo group.

First, constituent unit (A1) will be described.

In the formula (A1), M¹ represents one or more selected from a hydrogen atom, an alkali metal, an alkaline earth metal (1/2 atom), an ammonium group, an alkylammonium group, a substituted alkylammonium group, an alkyl group, a hydroxyalkyl group, and an alkenyl group. Examples of alkali metals may include sodium and potassium, and examples of alkaline earth metals may include magnesium. Further, examples of M¹ include ammonium, monoalkylammonium, dialkylammonium, trialkylammonium, and tetraalkylammonium (each alkyl group in the monoalkylammonium, dialkylammonium, and trialkylammonium has 2 or more and 8 or less carbons and may be substituted with one or more hydroxy groups), and the like. From the viewpoints of convenience and ready availability, the countercation is preferably an alkali metal, more preferably sodium.

The method for introducing constituent unit (A1) into component (A) is not particularly limited; however, it is preferable to polymerize, as a raw material, a monomer represented by the following general formula (A1'): 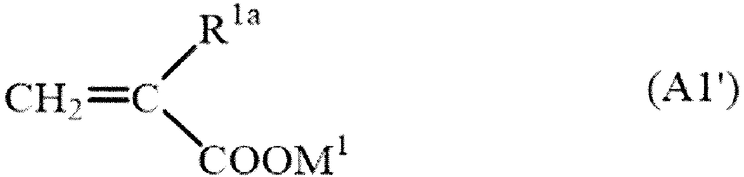 wherein R^{1a} and M¹ are as defined above.

When a monomer in which M¹ is a hydrogen atom is used as a raw material monomer for introducing constituent unit (A1), a countercation can be introduced by copolymerizing the monomer and thereafter neutralizing the carboxyl groups using a hydroxide of an alkali metal or an alkaline earth metal, ammonia, a monoalkylamine, a dialkylamine, or a trialkylamine (in which each alkyl group has 2 or more and 8 or less carbons and may be substituted with one or more hydroxy groups). Alternatively, the carboxyl groups may also be neutralized by exchanging the hydrogen atoms of the carboxyl groups with ammonium ions using a halide salt or a hydroxide salt of a monoalkylammonium, a dialkylammonium, a trialkylammonium, or a tetraalkylammonium (in which each alkyl group has 2 or more and 8 or less carbons and may be substituted with one or more hydroxy groups).

From the viewpoints of corrosion inhibition and safety, it is preferred that 20 to 95% of the hydrogen atoms of the carboxyl groups be neutralized.

Next, constituent unit (A2) will be described.

In the formula (A2), R^{2a} is preferably a methyl group from the viewpoint of favorable flow retention performance. Further, X¹ is preferably a direct bond or a carbonyl group, more preferably a carbonyl group. In the formula (A2), na is preferably 100 or more, more preferably 110 or more, further preferably 120 or more, and preferably 150 or less, more preferably 140 or less, further preferably 130 or less, from the same viewpoint.

The method for introducing constituent unit (A2) into component (A) is not particularly limited; however, it is preferable to polymerize, as a raw material, a monomer represented by the following general formula (A2'): 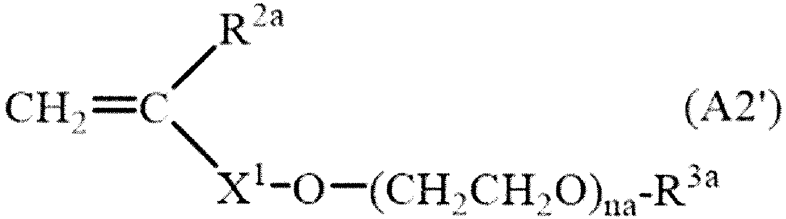 wherein R^{2a}, R^{3a}, X¹, and na are as defined above.

Monomer (A2') may be obtained using, for example, any of the following olefins.
(1) When X¹ is an alkylene group:
   a reaction product of ethylene oxide with allyl alcohol, isoprenyl alcohol, or methallyl alcohol.
(2) When X¹ is a direct bond:
   a monoether of polyethylene glycol with vinyl alcohol, allyl alcohol, isoprenyl alcohol, or methallyl alcohol; or
   an ether formed from an alkoxy polyethylene glycol capped with an alkyl group at one end and allyl alcohol, isoprenyl alcohol, or methallyl alcohol.
(3) When X¹ is a carbonyl group:
   a monoester of polyethylene glycol with acrylic acid or methacrylic acid;
   an ester formed from an alkoxy polyethylene glycol capped with an alkyl group at one end and acrylic acid or methacrylic acid; or
   a reaction product of ethylene oxide with acrylic acid or methacrylic acid.

Next, constituent unit (A3) will be described.

In the formula (A3), R^{4a} is preferably a methyl group from the viewpoint of favorable flow retention performance. Further, X² is preferably a direct bond or a carbonyl group, more preferably a carbonyl group. Y is preferably an alkyl group having 1 or more and 6 or less carbons.

The method for introducing constituent unit (A3) into component (A) is not particularly limited; however, it is preferable to polymerize, as a raw material, a monomer represented by the following general formula (A3'): 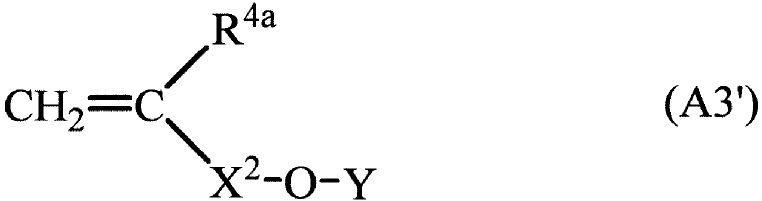 wherein R^{4a}, X², and Y are as defined above.

Monomer (A3') may be obtained using, for example, any of the following olefins.
(1) When X¹ is an alkylene group:
   a reaction product of ethylene oxide with allyl alcohol, isoprenyl alcohol, or methallyl alcohol.
(2) When X¹ is a direct bond:
   a monoether of polyethylene glycol with vinyl alcohol, allyl alcohol, isoprenyl alcohol, or methallyl alcohol; or
   an ether formed from an alkoxy polyethylene glycol capped with an alkyl group at one end and allyl alcohol, isoprenyl alcohol, or methallyl alcohol.
(3) When X¹ is a carbonyl group:
   a monoester of polyethylene glycol with acrylic acid or methacrylic acid;
   an ester formed from an alkoxy polyethylene glycol capped with an alkyl group at one end and acrylic acid or methacrylic acid; or
   a reaction product of ethylene oxide with acrylic acid or methacrylic acid.

In the copolymer of component (A), the ratio of the content of constituent unit (A1) to the total content of constituent units (A1), (A2), and (A3) is preferably 0.1 mass% or more, more preferably 0.2 mass% or more, from the viewpoint of favorable flow retention performance, and preferably 4.5 mass% or less, more preferably 4 mass% or less, further preferably 3 mass% or less, furthermore preferably 2 mass% or less, from the same viewpoint. This ratio is calculated by the following formula:
[[content of constituent unit (A1)] / [content of constituent unit (A1) + content of constituent unit (A2) + content of constituent unit (A3)]] × 100 (mass%). As used herein, the ratio of each constituent unit may be the ratio of the raw material monomer from which the constituent unit in the copolymer is derived, i.e., the charging ratio of the raw material monomer used to produce the copolymer, and such ratio may be regarded as being equal to the ratio of the constituent unit contained in the copolymer. Further, the ratio of each constituent unit may be the average value of the ratios of that constituent unit contained in the overall copolymer.

In the copolymer of component (A), the ratio of the content of constituent unit (A2) to the total content of constituent units (A1), (A2), and (A3) is preferably 1 mass% or more, more preferably 3 mass% or more, from the viewpoint of favorable flow retention performance, and preferably 5 mass% or less, more preferably 25 mass% or less, further preferably 20 mass% or less, furthermore preferably 15 mass% or less, from the same viewpoint. This ratio is calculated by the following formula: 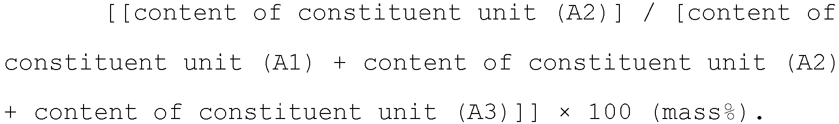 [[content of constituent unit (A2)] / [content of constituent unit (A1) + content of constituent unit (A2) + content of constituent unit (A3)]] × 100 (mass%).

In the copolymer of component (A), the ratio of the content of constituent unit (A3) to the total content of constituent units (A1), (A2), and (A3) is preferably 3 mass% or more, more preferably 5 mass% or more, from the viewpoint of favorable flow retention performance, and preferably 30 mass% or less, more preferably 25 mass% or less, further preferably 20 mass% or less, furthermore preferably 15 mass% or less, from the same viewpoint. This ratio is calculated by the following formula: 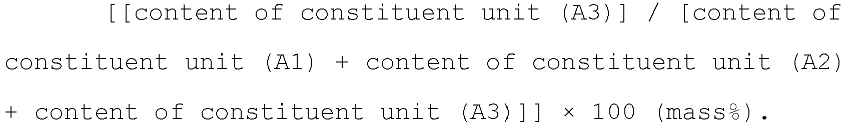 [[content of constituent unit (A3)] / [content of constituent unit (A1) + content of constituent unit (A2) + content of constituent unit (A3)]] × 100 (mass%).

The copolymer of component (A) may contain constituent units other than constituent units (A1), (A2), and (A3) [hereinafter referred to as constituent unit (A4)]. Examples of constituent unit (A4) may include constituent units introduced by copolymerizing one or more acrylic acid-based monomers selected from, for example, 2-(methacryloyloxy)ethyl phosphate, (2-hydroxyethyl) acrylate, (2-hydroxyethyl) methacrylate, methyl acrylate, ethyl acrylate, acrylonitrile, methallylsulfonic acid, acrylamide, methacrylamide, styrene, styrenesulfonic acid, di-[2-(1-methylvinylcarbonyl)ethyl] phosphate, di-[2-(vinylcarbonyl)ethyl] phosphate, [2-(1-methylvinylcarbonyl)ethyl] phosphate, phosphoric acid [2-(vinylcarbonyl)ethyl] acrylate ester, polyalkylene glycol mono(meth)acrylate acid phosphoric acid ester, crotonic acid, maleic acid, fumaric acid, itaconic acid, citraconic acid, and the like. These acrylic acid-based monomers may be in the form of an alkali metal salt, an alkaline earth metal salt, an ammonium salt, or an amine salt, and may also be in the form of an acid anhydride such as maleic anhydride or the like.

The ratio of the total content of constituent units (A1), (A2), and (A3) to the total content of all constituent units of the copolymer of component (A) is preferably 80 mass% or more, more preferably 90 mass% or more, from the viewpoint of favorable flow retention performance, and preferably 100 mass% or less, from the same viewpoint. This proportion is calculated by the following formula: 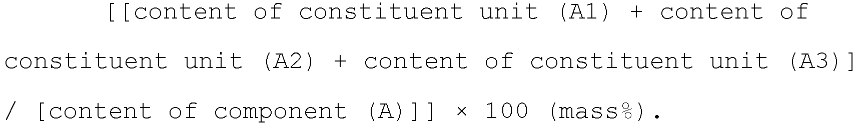 [[content of constituent unit (A1) + content of constituent unit (A2) + content of constituent unit (A3)] / [content of component (A)]] × 100 (mass%).

The copolymer of component (A) has a weight-average molecular weight of preferably 10,000 or more, more preferably 30,000 or more, from the viewpoint of favorable flow retention performance, and preferably 100,000 or less, more preferably 80,000 or less, from the same viewpoint. This weight-average molecular weight is measured by a high-speed GPC system (manufactured by Tosoh Corporation; HLC-8320GPC) under the following conditions: detector: RI; columns: G4000PWXL + G2500PWXL (anion); mobile phase: 0.2 M phosphate buffer / acetonitrile = 9/1; flow rate: 1.0 mL/min; column temperature: 40°C; and reference material: polyethylene glycol.

Optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under component (A)] may be blended into dispersant 2.

Dispersant 2 may contain water. Such a dispersant for a clay-containing hydraulic composition of the present invention may be a liquid composition.

Dispersant 2 is used in a hydraulic composition containing clay. Examples of such clay include bentonite, montmorillonite, kaolinite, smectite, and the like. Further, examples include a mixture of two or more of these. The clay is, for example, carried into the hydraulic composition on a raw material used for producing the hydraulic composition, such as aggregate and the like.

Dispersant 2 may be used in a clay-containing hydraulic composition formed by blending a hydraulic powder, an aggregate, clay, water, and the above dispersant.

Here, "hydraulic powder" refers to a powder capable of hardening by hydration, and examples thereof include cement, gypsum, and the like. Preferably, cements such as ordinary Portland cement, belite cement, moderate-heat cement, high-early-strength cement, ultrahigh-early-strength cement, sulfate-resisting cement, and the like are used. Alternatively, blast furnace slag cement, fly ash cement, silica fume cement, and the like may also be used. Such cements may be obtained by adding, to the above-listed cements, powders having pozzolanic activity and/or latent hydraulicity, such as blast furnace slag, fly ash, silica fume, and the like, as well as stone powder (calcium carbonate powder) and the like. Here, when the hydraulic powder contains, in addition to a powder capable of hardening by hydration such as cement and the like, one or more powders selected from a pozzolanic powder, a latent hydraulic powder, and stone powder (calcium carbonate powder), the amounts of such powders are also included in the amount of the hydraulic powder in the present invention. Further, when the powder capable of hardening by hydration contains a high-strength admixture, the amount of the high-strength admixture is also included in the amount of the hydraulic powder. The same applies to parts by mass, mass ratios, and the like in which the mass of the hydraulic powder is relevant.

Aggregate includes aggregate selected from fine aggregate and coarse aggregate. Examples of fine aggregate include those specified in No. 2311 of JIS A 0203:2014. Examples of fine aggregate include river sand, land sand, mountain sand, sea sand, lime sand, silica sand, and crushed sand derived therefrom; blast furnace slag fine aggregate; ferronickel slag fine aggregate; lightweight fine aggregate (artificial and natural); recycled fine aggregate; and the like. Further, examples of coarse aggregate include those specified in No. 2312 of JIS A 0203:2014. Examples of coarse aggregate include, for example, river gravel, land gravel, mountain gravel, sea gravel, lime gravel, and crushed stone derived therefrom; blast furnace slag coarse aggregate; ferronickel slag coarse aggregate; lightweight coarse aggregate (artificial and natural); recycled coarse aggregate; and the like. Fine aggregate and coarse aggregate may be used in combination of two or more different types or may each be used alone.

In general, when a clay component is carried into concrete or mortar, it is necessary to increase the addition amount of a dispersant. Increasing the addition amount of a dispersant may cause problems such as increased cost, setting retardation, decreased strength, increased bleeding, and aggregate settlement immediately after mixing. However, due to the recent deterioration in aggregate quality, the use of aggregate with clay adhering thereto may sometimes be unavoidable.

The clay-containing hydraulic composition can impart excellent flow retention performance to the hydraulic composition even when using the aggregate in which the ratio of the clay content to the aggregate content is, for example, 0.03 mass% or more, or 0.1 mass% or more, further 0.5 mass% or more, and, for example, 5 mass% or less, or 4 mass% or less, further 3 mass% or less. Note that, in the present invention, the bentonite content in the aggregate measured in accordance with JIS Z 2451:2019 (spot method) may be used as the clay content in the aggregate. This ratio can be calculated by the following formula: 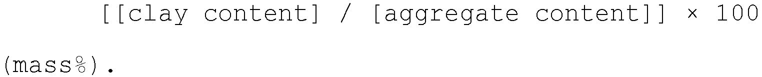 [[clay content] / [aggregate content]] × 100 (mass%) .

In the clay-containing hydraulic composition, the ratio of the content of component (A) to the clay content is preferably 0.25 mass% or more, more preferably 0.3 mass% or more, further preferably 0.4 mass% or more, from the viewpoint of favorable flow retention performance, and preferably 5 mass% or less, more preferably 4 mass% or less, further preferably 3 mass% or less, from the same viewpoint. This ratio can be calculated by the following formula: 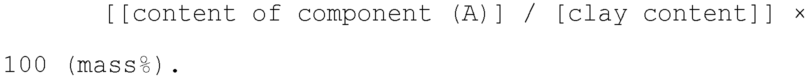 [[content of component (A)] / [clay content]] × 100 (mass%).

In the clay-containing hydraulic composition, the ratio of the blending amount of component (A) to the blending amount of the hydraulic powder is preferably 0.01 mass% or more, more preferably 0.015 mass% or more, furthermore preferably 0.02 mass% or more, from the viewpoint of favorable flow retention performance, and preferably 0.25 mass% or less, more preferably 0.2 mass% or less, furthermore preferably 0.15 mass% or less, from the same viewpoint. This ratio can be calculated by the following formula: 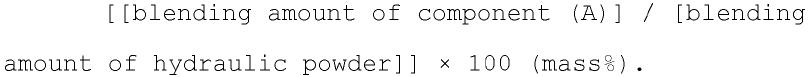 [[blending amount of component (A)] / [blending amount of hydraulic powder]] × 100 (mass%).

In the clay-containing hydraulic composition, the water/hydraulic powder ratio [which is the mass percentage (mass%) of water relative to hydraulic powder in a slurry and is commonly abbreviated as W/P or abbreviated as W/C when the hydraulic powder is cement] is preferably 15% or more, more preferably 25% or more, from the viewpoints of strength development and workability, and preferably 70% or less, more preferably 50% or less, from the same viewpoints.

When the clay-containing hydraulic composition is concrete, the amount of coarse aggregate used, expressed as bulk volume, is preferably 50% or more, more preferably 55% or more, further preferably 60% or more, from the viewpoints of strength development of the hydraulic composition, reducing the amount of hydraulic powder such as cement and the like used, and improving fillability into formwork and the like, and preferably 100% or less, more preferably 90% or less, further preferably 80% or less, from the same viewpoints. "Bulk volume" refers to the proportion of the volume (including voids) of coarse aggregate in 1 m³ of concrete.

Further, when the clay-containing hydraulic composition is concrete, the amount of fine aggregate used is preferably 500 kg/m³ or more, more preferably 600 kg/m³ or more, further preferably 700 kg/m³ or more, from the viewpoint of improving fillability into formwork and the like, and preferably 1,000 kg/m³ or less, more preferably 900 kg/m³ or less, from the same viewpoint.

When the clay-containing hydraulic composition is mortar, the amount of fine aggregate used is preferably 800 kg/m³ or more, more preferably 900 kg/m³ or more, further preferably 1,000 kg/m³ or more, from the viewpoint of improving fillability into formwork and the like, and preferably 2,000 kg/m³ or less, more preferably 1,800 kg/m³ or less, further preferably 1,700 kg/m³ or less, from the same viewpoint.

In the clay-containing hydraulic composition, the ratio of the blending amount of component (A) to the blending amount of the hydraulic powder is preferably 0.1 mass% or more, more preferably 0.15 mass% or more, further preferably 0.2 mass% or more, from the viewpoint of favorable flow retention performance, and preferably 0.5 mass% or less, more preferably 0.4 mass% or less, further preferably 0.35 mass% or less, from the same viewpoint. This ratio can be calculated by the following formula: 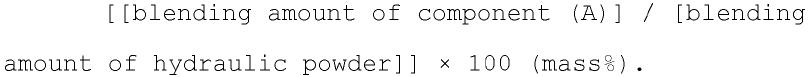 [[blending amount of component (A)] / [blending amount of hydraulic powder]] × 100 (mass%).

In the clay-containing hydraulic composition, the water/hydraulic powder ratio [which is the mass percentage (mass%) of water relative to hydraulic powder in a slurry and is commonly abbreviated as W/P or abbreviated as W/C when the hydraulic powder is cement] is preferably 15% or more, more preferably 25% or more, from the viewpoints of strength development and workability, and preferably 70% or less, more preferably 50% or less, from the same viewpoints.

The clay-containing hydraulic composition may contain optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under component (A)].

A hardened product can be obtained by curing the clay-containing hydraulic composition by a known method. The hydraulic composition may be cured in consideration of the intended use, shape, and the like of the hardened product.

The matters described for dispersant 2 and the clay-containing hydraulic composition may be applied, as appropriate, to a method for producing the clay-containing hydraulic composition. Specific examples, preferred embodiments, and the like of hydraulic powder, aggregate, clay, component (A), and optional components used in the method for producing the clay-containing hydraulic composition of the present invention are the same as those in the dispersant for a clay-containing hydraulic composition and the clay-containing hydraulic composition of the present invention. Further, the preferred ranges described above for the contents of the respective components in the dispersant for a clay-containing hydraulic composition of the present invention and in the clay-containing hydraulic composition of the present invention may be applied to the method for producing the clay-containing hydraulic composition of the present invention by replacing the contents with mixing amounts.

The method for producing the clay-containing hydraulic composition is not limited by the order in which the components are mixed. However, examples of simpler and more effective methods include mixing the hydraulic powder with the aggregate containing clay, and then mixing the resulting mixture with a mixing liquid containing component (A) and water. Examples of such a method include mixing the hydraulic powder, coarse aggregate, and fine aggregate for a predetermined time, for example, for 5 seconds or more and 60 seconds or less, and then mixing the resulting mixture with a mixing liquid containing component (A) and water. Mixing can be performed using a known mixer. The mixing liquid may be an aqueous solution or an aqueous suspension.

In the method for producing the clay-containing hydraulic composition of the present invention, component (A) can be mixed in an amount falling within the range described for the clay-containing hydraulic composition of the present invention, based on the amount of the hydraulic powder.

Specifically, in the method for producing the clay-containing hydraulic composition, the ratio of the mixing amount of component (A) to the blending amount of the hydraulic powder is preferably 0.01 mass% or more, more preferably 0.015 mass% or more, furthermore preferably 0.02 mass% or more, and preferably 0.25 mass% or less, more preferably 0.2 mass% or less, further preferably 0.15 mass% or less.

In the method for producing the clay-containing hydraulic composition, optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under component (A)] may be mixed.

In the method for producing the clay-containing hydraulic composition, optional components such as a retarder, a setting accelerator, an air-entraining (AE) agent, an expansive agent, a foaming agent, a thickener, a plasticizer, a blowing agent, a waterproofing agent, a defoamer, and other components [excluding those falling under component (A)] may be mixed.

Further, in the method for producing the clay-containing hydraulic composition, water and the hydraulic powder may be mixed such that the water/hydraulic powder ratio (mass%) is preferably 15% or more, more preferably 25% or more, from the viewpoint of workability, and preferably 70% or less, more preferably 50% or less, from the same viewpoint.

### Examples

The following monomers were used as raw materials for producing the copolymers of components (A) and (B).
Components (A1) and (B1): Methacrylic acid
Component (A2): MEPEG(120) methacrylate, which is an ester formed from methacrylic acid and polyethylene glycol monomethyl ether having an average number of added moles of oxyethylene groups of 120
Component (B2): MEPEG(23) methacrylate, which is an ester formed from methacrylic acid and polyethylene glycol monomethyl ether having an average number of added moles of oxyethylene groups of 23
Component (A3): Methyl acrylate

Copolymer A-1 was produced as follows.

A glass reaction vessel equipped with a stirrer was charged with 314.5 g of water, purged with nitrogen while stirring, and heated to 80°C under a nitrogen atmosphere. A solution prepared by mixing 638.4 g of an aqueous solution containing MEPEG(120) methacrylate, methacrylic acid, and methyl acrylate with 1.9 g of 2-mercaptoethanol, and a solution prepared by dissolving 4.1 g of ammonium persulfate in 25 g of water were each added dropwise into the vessel over 1.5 hours. In the aqueous solution containing MEPEG(120) methacrylate, methacrylic acid, and methyl acrylate, the content of MEPEG(120) methacrylate was 317.0 g, the content of methacrylic acid was 8.4 g, the content of methyl acrylate was 36.1 g, the content of a neutralization salt of the acid catalyst used for esterification was 33.2 g, and the water content was 243.7 g. Next, a solution prepared by dissolving 1.4 g of ammonium persulfate in 10.00 g of water was added dropwise over 30 minutes, and the mixture was then aged at the same temperature (80°C) for 1 hour. After completion of aging, the mixture was neutralized with 4.2 g of a 48% aqueous sodium hydroxide solution to obtain a reaction product containing copolymer A-1 having a weight-average molecular weight of 60,000 and water.

The following components (A) and (B) were produced in the same manner as A-1 in the above production example, except that the types and amounts of monomers used were changed.

### <Component (A)>

A-1: A copolymer of methacrylic acid/methyl acrylate/MEPEG(120) methacrylate (mass ratio: 3/10/87; weight-average molecular weight: 60,000), in which a portion of the carboxyl groups has been neutralized with sodium hydroxide to form sodium carboxylate groups.

### <Component (B)>

B-1: A copolymer of methacrylic acid/MEPEG(23) methacrylate (mass ratio: 17/83; weight-average molecular weight: 45,000), in which a portion of the carboxyl groups has been neutralized with sodium hydroxide to form sodium carboxylate groups.

Further, as a comparative material for component (A), copolymer A'-1 not containing component (A3) was obtained in the same manner as in the above production

### example.

A'-1: A copolymer of methacrylic acid/MEPEG(120) methacrylate (mass ratio: 3/97; weight-average molecular weight: 70,000), in which a portion of the carboxyl groups has been neutralized with sodium hydroxide to form sodium carboxylate groups.

### <Preparation of dispersant for clay-containing hydraulic composition>

A dispersant for a clay-containing hydraulic composition was prepared by mixing components (A) and (B) so that the addition amounts of components (A) and (B) in the clay-containing hydraulic composition were the values shown in Table 1. In this preparation, 40 mass% aqueous solutions of components (A) and (B) were used.

The addition amounts of components (A) and (B) were adjusted so that the initial flow value of the composition immediately after mixing was 200 mm, as determined in accordance with the test method (flow test) of JIS R 5201 using a conical container having a diameter of 100 mm.

Note that, for each dispersant for a hydraulic composition, a 1 mass% aqueous solution of DEFOAMER No. 21 (manufactured by Kao Corporation) was added in an amount of 5 g per 100 parts by mass of the dispersant.

### <Preparation of mortar>

The components used for mortar preparation are as follows.
· Water (W): Tap water
· Cement (C): Ordinary Portland cement (a mixture of two products manufactured by Taiheiyo Cement Corporation and Sumitomo Osaka Cement Co., Ltd. at a mass ratio of 1/1); density: 3.16 g/cm³
· Fine aggregate (S): Mountain sand from Joyo; density: 2.55 g/cm³
· Kasaoka clay (bentonite-based clay; manufactured by Kasanen Kogyo Co., Ltd.); density: 2.70 g/cm³

Cement (C) and fine aggregate (S) were placed in a mortar mixer (Universal Mixing and Stirring Machine manufactured by Nishinihon Shikenki Co., Ltd.; Model: Small Mortar Mixer C-210) and dry-mixed for 10 seconds at a low rotation speed (63 rpm) of the mortar mixer, and mixing water (W) containing the prepared dispersant for a clay-containing hydraulic composition was added. The resulting mixture was then mixed for 120 seconds at the same low rotation speed (63 rpm) of the mortar mixer to prepare the mortar. The mortar was prepared under the following formulation conditions at each temperature: cement (C) 400 g; fine aggregate (S) 680 g; Kasaoka clay 20 g; and water/cement ratio (W/C) 35 mass%. Further, the dispersant for a clay-containing hydraulic composition was added to the mixing water so that the contents of components (A) and (B) per 100 parts by mass of cement were the amounts shown in Table 1. In this example, it was assumed that the fine aggregate contained 2.9 mass% of clay (Kasaoka clay).

### <Flowability evaluation of mortar>

The mixed composition was placed into a conical container having a diameter of 100 mm. After 20 minutes, the flowability of each composition was evaluated in accordance with the test method (flow test) of JIS R 5201, and the resulting value was taken as the flow value after 20 minutes. Further, the retention ratio was calculated by the following formula: 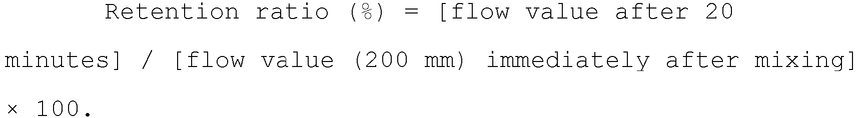 Retention ratio (%) = [flow value after 20 minutes] / [flow value (200 mm) immediately after mixing] × 100.

A higher retention ratio indicates better retention of the flowability immediately after mixing.

Flow retention performance was evaluated by calculating a retention performance ratio using, as a reference, the flow value after 20 minutes (136 mm) of a composition containing only component (B) without component (A) (Comparative Example 1), in accordance with the following formula: 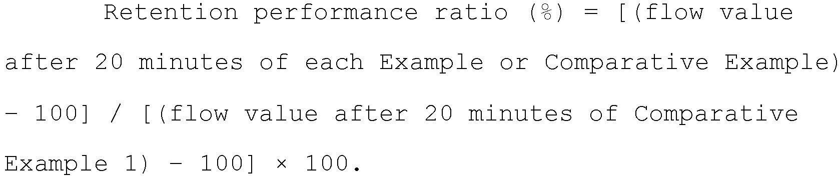 Retention performance ratio (%) = [(flow value after 20 minutes of each Example or Comparative Example) - 100] / [(flow value after 20 minutes of Comparative Example 1) - 100] × 100.

A higher retention performance ratio indicates that higher flowability is retained.

Further, compressive strength after 16 hours was measured in accordance with the test method of JIS A 1108. Test specimens having a diameter of 5 cm and a height of 10 cm were used. Unbonded caps were used for capping.

A compressive strength ratio was calculated by the following formula using, as a reference, the compressive strength after 16 hours (10.6 MPa) of Comparative Example 1: 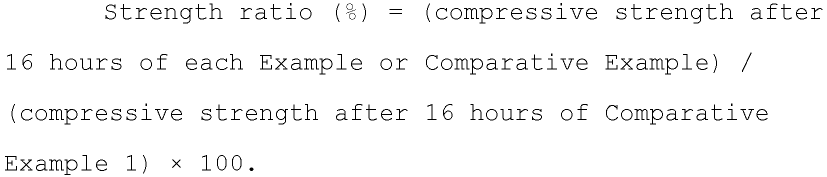 Strength ratio (%) = (compressive strength after 16 hours of each Example or Comparative Example) / (compressive strength after 16 hours of Comparative Example 1) × 100.

Table 1 shows the retention ratio, the retention performance ratio, and the compressive strength ratio for various Examples and Comparative Examples.

**[Table 1]**

| | Component (A) | | Component (B) | | (A) + (B) [mass%] | (A) / [(A) + (B)] [%] | After 20 minutes | | | Compressive strength after 16 hours | |
|---|---|---|---|---|---|---|---|---|---|---|---|
| | Type | Content [mass%] | Type | Content [mass%] | | | Flow value [mm] | Retention ratio [%] | Retention performance ratio [%] | MPa | Strength ratio [%] |
| Comparative example 1 | - | - | B-1 | 0.301 | 0.301 | 0 | 136 | 68 | 100 | 10.6 | 100 |
| Example 1 | A-1 | 0.0265 | B-1 | 0.239 | 0.265 | 10 | 156 | 78 | 156 | 11.6 | 109 |
| Example 2 | A-1 | 0.0780 | B-1 | 0.182 | 0.260 | 30 | 160 | 80 | 167 | 12.2 | 115 |
| Example 3 | A-1 | 0.143 | B-1 | 0.143 | 0.286 | 50 | 160 | 80 | 167 | 126 | 119 |
| Comparative example 2 | A'-1 | 0.0275 | B-1 | 0.248 | 0.275 | 10 | 138 | 69 | 106 | 11.3 | 107 |
| Comparative example 3 | A'-1 | 0.0783 | B-1 | 0.183 | 0.261 | 30 | 138 | 69 | 106 | 11.6 | 109 |
| Comparative example 4 | A'-1 | 0.147 | B-1 | 0.147 | 0.294 | 50 | 134 | 67 | 94 | 11.6 | 109 |

In Comparative Example 1, in which component (A) was not used, a dispersant amount of 0.301 mass% was required to obtain an initial flow value of 200 mm. In addition, the retention ratio was 68%, indicating that the flowability was reduced (the retention ratio is the ratio of the flow value after 20 minutes to the initial flow value).

In Example 1, in which the content of component (A) to the total content of components (A) and (B) was set to 10 mass%, and A-1 was used as component (A) and B-1 was used as component (B), an initial flow value of 200 mm was obtained with a smaller dispersant amount of 0.265 mass% than in Comparative Example 1. In addition, the retention ratio was 78%, indicating that the flowability was retained more favorably even after 20 minutes as compared with Comparative Example 1. Further, a higher retention performance ratio of 156% was achieved. Even when the content of component (A) to the total content of components (A) and (B) was set to 30 mass% and 50 mass%, an initial flow value of 200 mm was obtained with a smaller dispersant amount, and the retention ratio and the retention performance ratio were higher (Examples 2 and 3). Moreover, the values of the compressive strength after 16 hours were higher, at 109% to 119%, as compared with Comparative Example 1.

On the other hand, using copolymer A'-1 not containing component (A3) as component (A) and copolymer B-1 as component (B), a test was conducted in the same manner as in the Examples. When the content of component (A) to the total content of components (A) and (B) was set to 10 to 50 mass%, the dispersant amount required to obtain an initial flow value of 200 mm was larger, and the retention ratio and the retention performance ratio were lower than those in Examples 1 to 3 (Comparative Examples 2 to 4).

## Claims

1. Use of a dispersant in a clay-containing hydraulic composition, the dispersant comprising the following component (A) and the following component (B),
wherein the ratio of the content of the component (A) to the total content of the components (A) and (B), represented by: 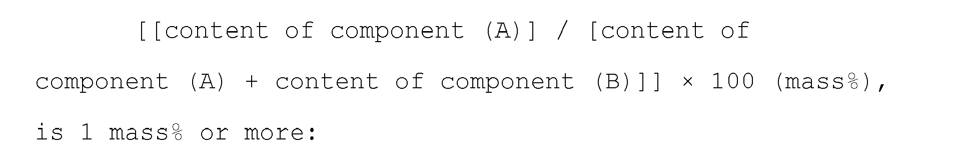 [[content of component (A)] / [content of component (A) + content of component (B)]] × 100 (mass%), is 1 mass% or more:
<component (A)>
a copolymer comprising a constituent unit (A1) represented by the following general formula (A1), a constituent unit (A2) represented by the following general formula (A2), and a constituent unit (A3) represented by the following general formula (A3),
wherein the ratio of the content of the constituent unit (A1) to the total content of the constituent units (A1), (A2), and (A3), represented by: 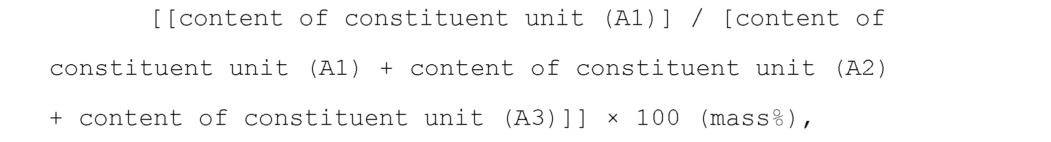 [[content of constituent unit (A1)] / [content of constituent unit (A1) + content of constituent unit (A2) + content of constituent unit (A3)]] × 100 (mass%), is 0.1 mass% or more and 4.5 mass% or less; and
the copolymer has a weight-average molecular weight of 10,000 or more and 100,000 or less: 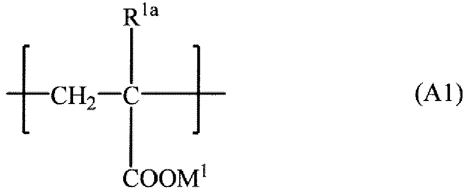 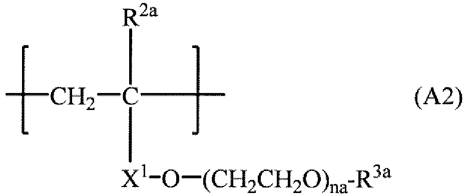 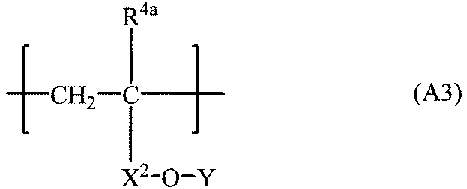
wherein R^{1a}, R^{2a}, and R^{4a} are the same or different, and each represent a hydrogen atom or a methyl group;
R^{3a} represents a hydrogen atom or an alkyl group having 1 or more and 3 or less carbons;
M¹ represents one or more selected from a hydrogen atom and a countercation;
X¹ and X² are the same or different, and each represent an alkylene group having 1 or more and 6 or less carbons, a direct bond, or a carbonyl group;
na represents the average number of added moles of oxyethylene groups (-CH₂CH₂O-), the number being 100 or more and 150 or less; and
Y represents an alkyl group having 1 or more and 6 or less carbons and/or a sulfo group; and
<component (B)>
a copolymer comprising a constituent unit (B1) represented by the following general formula (B1) and a constituent unit (B2) represented by the following general formula (B2),
wherein the ratio of the content of the constituent unit (B1) to the total content of the constituent units (B1) and (B2), represented by: 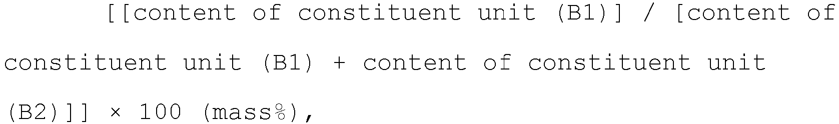 [[content of constituent unit (B1)] / [content of constituent unit (B1) + content of constituent unit (B2)]] × 100 (mass%), is 5 mass% or more and less than 30 mass%: 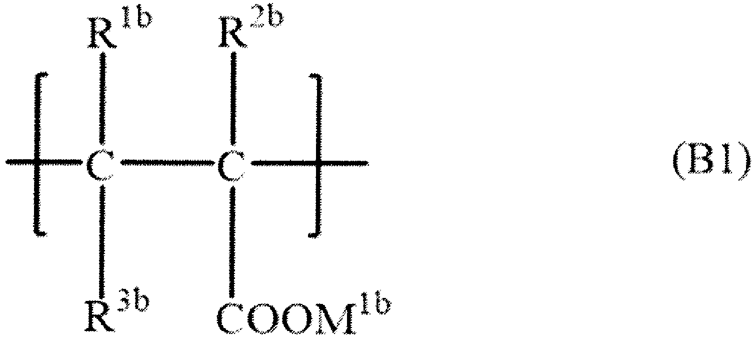
wherein M^{1b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
R^{1b}, R^{2b}, and R^{3b} are the same or different, and each represent a hydrogen atom, a methyl group, or a group represented by the following general formula (1):
- (CH₂)ᵣCOOM^{2b} (1)
wherein r represents 0, 1, or 2; and
M^{2b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group,
wherein - (CH₂)ᵣCOOM^{2b} (1) may bind to COOM^{1b} in the same or a different constituent unit to form an acid anhydride structure -(CH₂)ᵣC(=O)-O-C(=O)-, or may bind to -(CH₂)ᵣCOOM^{2b} in the same or a different constituent unit to form an acid anhydride structure -(CH₂)ᵣC(=O)-O-C(=O) (CH₂)ᵣ-, and in either case, neither M^{1b} nor M^{2b} is present; 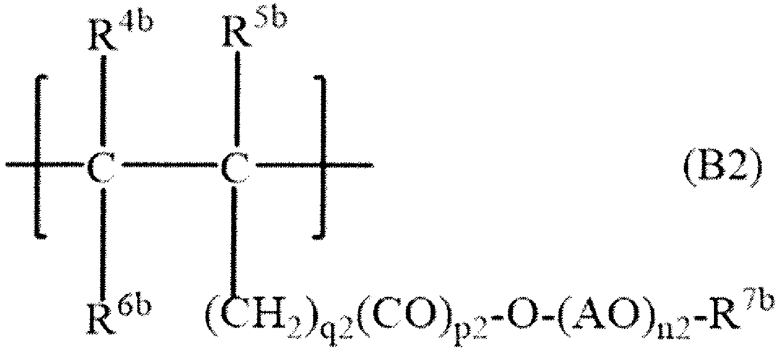
wherein R^{4b} and R^{5b} are the same or different, and each represent a hydrogen atom or a methyl group;
AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{6b} represents a hydrogen atom, a methyl group, a group represented by the following general formula (2), or a group represented by the following general formula (3):
-(CH₂)ₛCOOM^{3b} (2)
wherein s represents 0, 1, or 2; and
M^{3b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; or
- (CH₂)_{q2}(CO)ₚ₂O(AO)ₙ₂R^{7b} (3)
wherein AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{7b} represents a hydrogen atom or an alkyl group having 1 or more and 4 or less carbons.

2. Use of the dispersant according to claim 1 in a clay-containing hydraulic composition, wherein X¹ and X² each represent a carbonyl group, q2 is 0, and p2 is 1.

3. Use of the dispersant according to claim 1 or 2 in a clay-containing hydraulic composition, wherein Y is an alkyl group having 1 or more and 6 or less carbons.

4. Use of the dispersant according to any one of claims 1 to 3 in a clay-containing hydraulic composition, wherein the ratio of the total content of the constituent units (A1), (A2), and (A3) to the total content of all constituent units of the copolymer of component (A) is 80 mass% or more and 100 mass% or less.

5. Use of the dispersant according to any one of claims 1 to 3 in a clay-containing hydraulic composition, wherein the ratio of the content of the component (A) to the total content of the components (A) and (B), represented by: 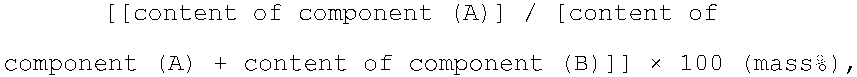 [[content of component (A)] / [content of component (A) + content of component (B)]] × 100 (mass%), is 70 mass% or less.

6. Use of the dispersant according to any one of claims 1 to 3 in a clay-containing hydraulic composition, wherein the ratio of the content of the constituent unit (A2) to the total content of the constituent units (A1), (A2), and (A3), represented by: 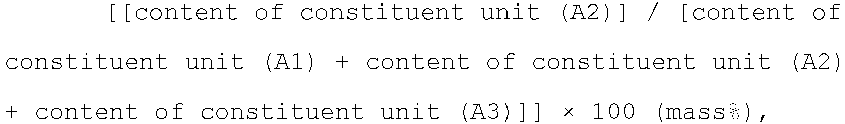 [[content of constituent unit (A2)] / [content of constituent unit (A1) + content of constituent unit (A2) + content of constituent unit (A3)]] × 100 (mass%), is 1 mass% or more and 25 mass% or less.

7. A clay-containing hydraulic composition comprising a hydraulic powder, an aggregate, clay, water, the following component (A), and the following component (B),
wherein the ratio of the clay content to the aggregate content, represented by: 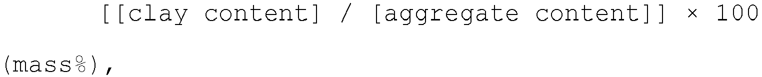 [[clay content] / [aggregate content]] × 100 (mass%), is 5 mass% or less; and
the ratio of the content of the component (A) to the total content of the components (A) and (B), represented by: 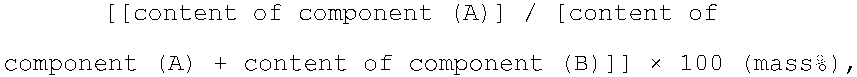 [[content of component (A)] / [content of component (A) + content of component (B)]] × 100 (mass%), is 1 mass% or more:
<component (A)>
a copolymer comprising a constituent unit (A1) represented by the following general formula (A1), a constituent unit (A2) represented by the following general formula (A2), and a constituent unit (A3) represented by the following general formula (A3),
wherein the ratio of the content of the constituent unit (A1) to the total content of the constituent units (A1), (A2), and (A3), represented by: 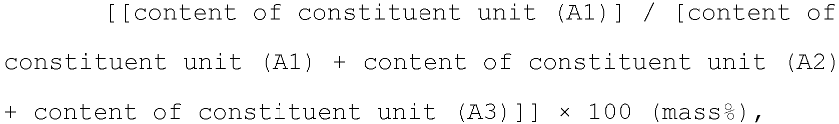 [[content of constituent unit (A1)] / [content of constituent unit (A1) + content of constituent unit (A2) + content of constituent unit (A3)]] × 100 (mass%), is 0.1 mass% or more and 4.5 mass% or less; and
the copolymer has a weight-average molecular weight of 10,000 or more and 100,000 or less: 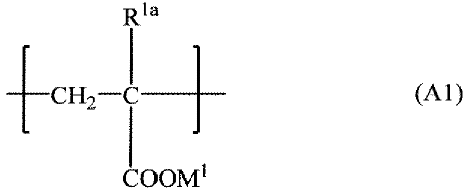 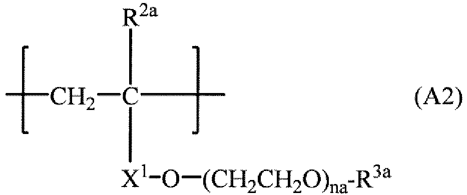 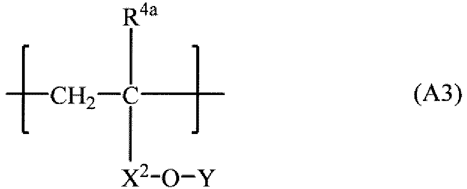
wherein R^{1a}, R^{2a}, and R^{4a} are the same or different, and each represent a hydrogen atom or a methyl group;
R^{3a} represents a hydrogen atom or an alkyl group having 1 or more and 3 or less carbons;
M¹ represents one or more selected from a hydrogen atom and a countercation;
X¹ and X² are the same or different, and each represent an alkylene group having 1 or more and 6 or less carbons, a direct bond, or a carbonyl group;
na represents the average number of added moles of oxyethylene groups (-CH₂CH₂O-), the number being 100 or more and 150 or less; and
Y represents an alkyl group having 1 or more and 6 or less carbons and/or a sulfo group; and
<component (B)>
a copolymer comprising a constituent unit (B1) represented by the following general formula (B1) and a constituent unit (B2) represented by the following general formula (B2),
wherein the ratio of the content of the constituent unit (B1) to the total content of the constituent units (B1) and (B2), represented by: 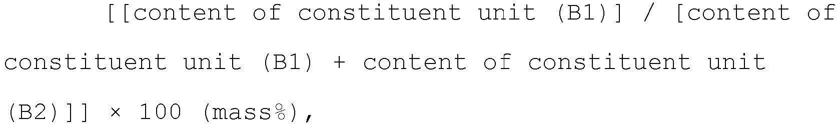 [[content of constituent unit (B1)] / [content of constituent unit (B1) + content of constituent unit (B2)]] × 100 (mass%), is 5 mass% or more and less than 30 mass%: 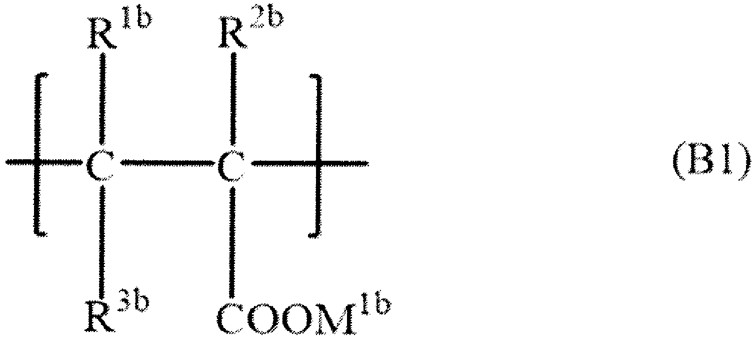
wherein M^{1b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
R^{1b}, R^{2b}, and R^{3b} are the same or different, and each represent a hydrogen atom, a methyl group, or a group represented by the following general formula (1):
-(CH₂)ᵣCOOM^{2b} (1)
wherein r represents 0, 1, or 2; and
M^{2b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group,
wherein -(CH₂)ᵣCOOM^{2b} (1) may bind to COOM^{1b} in the same or a different constituent unit to form an acid anhydride structure -(CH₂)ᵣC(=O)-O-C(=O)-, or may bind to -(CH₂)ᵣCOOM^{2b} in the same or a different constituent unit to form an acid anhydride structure -(CH₂)ᵣC(=O)-O-C(=O) (CH₂)ᵣ-, and in either case, neither M^{1b} nor M^{2b} is present; 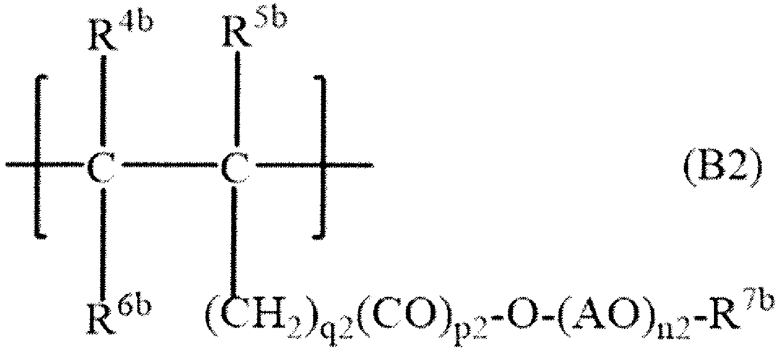
wherein R^{4b} and R^{5b} are the same or different, and each represent a hydrogen atom or a methyl group;
AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{6b} represents a hydrogen atom, a methyl group, a group represented by the following general formula (2), or a group represented by the following general formula (3):
-(CH₂)ₛCOOM^{3b} (2)
wherein s represents 0, 1, or 2; and
M^{3b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; or
- (CH₂)_{q2}(CO)ₚ₂O(AO)ₙ₂R^{7b} (3)
wherein AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{7b} represents a hydrogen atom or an alkyl group having 1 or more and 4 or less carbons.

8. The clay-containing hydraulic composition according to claim 7, wherein X¹ and X² each represent a carbonyl group, q2 is 0, and p2 is 1.

9. A dispersant for the clay-containing hydraulic composition according to claim 7 or 8, wherein Y is an alkyl group having 1 or more and 6 or less carbons.

10. The clay-containing hydraulic composition according to any one of claims 7 to 9, wherein the ratio of the clay content to the aggregate content, represented by: 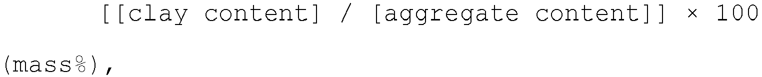 [[clay content] / [aggregate content]] × 100 (mass%), is 0.03 mass% or more and 5 mass% or less.

11. The clay-containing hydraulic composition according to any one of claims 7 to 9, wherein the ratio of the content of the component (A) to the clay content, represented by: 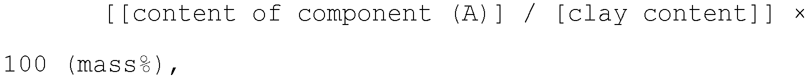 [[content of component (A)] / [clay content]] × 100 (mass%), is 0.25 mass% or more and 5 mass% or less.

12. The clay-containing hydraulic composition according to any one of claims 7 to 9, wherein the component (A) is contained in an amount of 0.01 parts by mass or more and 0.25 parts by mass or less per 100 parts by mass of the hydraulic powder.

13. The clay-containing hydraulic composition according to any one of claims 7 to 9, wherein the component (A) and the component (B) are contained in a total amount of 0.1 parts by mass or more and 0.5 parts by mass or less per 100 parts by mass of the hydraulic powder.

14. A method for producing a clay-containing hydraulic composition, comprising mixing a hydraulic powder, an aggregate, clay, water, the following component (A), and the following component (B),
wherein the ratio of the mixing amount of the clay to the mixing amount of the aggregate is 1 mass% or more and 5 mass% or less; and
the ratio of the content (parts by mass) of the component (A) to the total content (parts by mass) of the components (A) and (B) is 1 mass% or more:
<component (A)>
a copolymer comprising a constituent unit (A1) represented by the following general formula (A1), a constituent unit (A2) represented by the following general formula (A2), and a constituent unit (A3) represented by the following general formula (A3),
wherein the ratio of the content of the constituent unit (A1) to the total content of the constituent units (A1), (A2), and (A3), represented by: 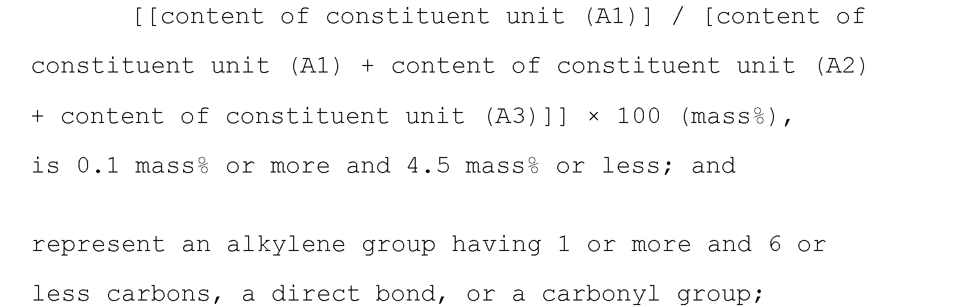 [[content of constituent unit (A1)] / [content of constituent unit (A1) + content of constituent unit (A2) + content of constituent unit (A3)]] × 100 (mass%), is 0.1 mass% or more and 4.5 mass% or less; and
the copolymer has a weight-average molecular weight of 10,000 or more and 100,000 or less: 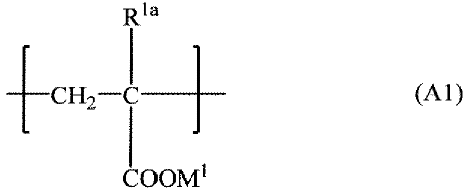 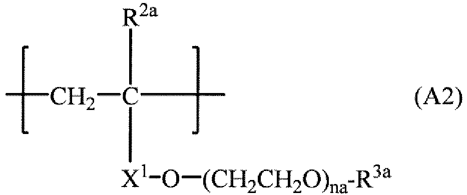 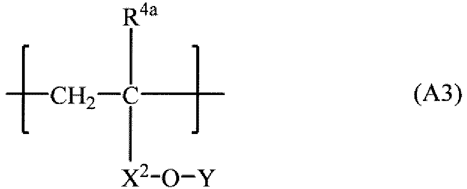
wherein R^{1a}, R^{2a}, and R^{4a} are the same or different, and each represent a hydrogen atom or a methyl group;
R^{3a} represents a hydrogen atom or an alkyl group having 1 or more and 3 or less carbons;
M¹ represents one or more selected from a hydrogen atom and a countercation;
X¹ and X² are the same or different, and each represent an alkylene group having 1 or more and 6 or less carbons, a direct bond, or a carbonyl group;
na represents the average number of added moles of oxyethylene groups (-CH₂CH₂O-), the number being 100 or more and 150 or less; and
Y represents an alkyl group having 1 or more and 6 or less carbons and/or a sulfo group; and
<component (B)>
a copolymer comprising a constituent unit (B1) represented by the following general formula (B1) and a constituent unit (B2) represented by the following general formula (B2),
wherein the ratio of the content of the constituent unit (B1) to the total content of the constituent units (B1) and (B2), represented by: 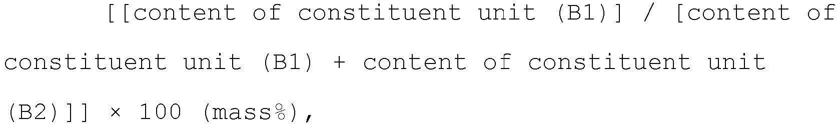 [[content of constituent unit (B1)] / [content of constituent unit (B1) + content of constituent unit (B2)]] × 100 (mass%), is 5 mass% or more and less than 30 mass%: 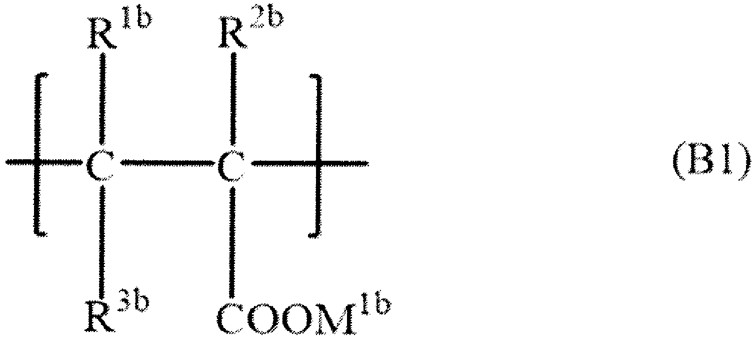
wherein M^{1b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; and
R^{1b}, R^{2b}, and R^{3b} are the same or different, and each represent a hydrogen atom, a methyl group, or a group represented by the following general formula (1):
- (CH₂)ᵣCOOM^{2b} (1)
wherein r represents 0, 1, or 2; and
M^{2b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group,
wherein -(CH₂)ᵣCOOM^{2b} (1) may bind to COOM^{1b} in the same or a different constituent unit to form an acid anhydride structure -(CH₂)ᵣC(=O)-O-C(=O)-, or may bind to -(CH₂)ᵣCOOM^{2b} in the same or a different constituent unit to form an acid anhydride structure -(CH₂)ᵣC(=O)-O-C(=O) (CH₂)ᵣ-, and in either case, neither M^{1b} nor M^{2b} is present; 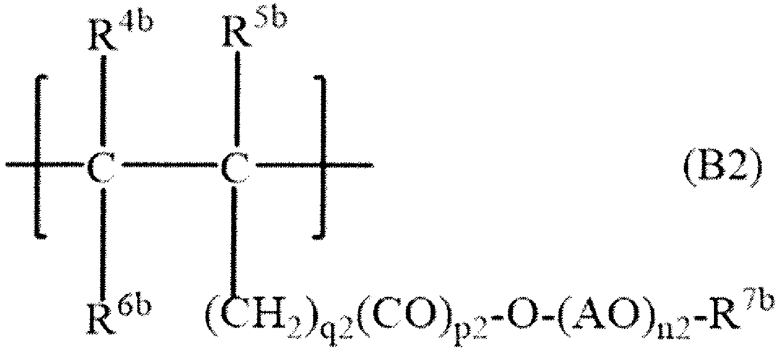
wherein R^{4b} and R^{5b} are the same or different, and each represent a hydrogen atom or a methyl group;
AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{6b} represents a hydrogen atom, a methyl group, a group represented by the following general formula (2), or a group represented by the following general formula (3):
-(CH₂)ₛCOOM^{3b} (2)
wherein s represents 0, 1, or 2; and
M^{3b} represents a hydrogen atom, an alkali metal, an alkaline earth metal (1/2 atom), an ammonium group, an alkylammonium group, a substituted alkylammonium group, an alkyl group, a hydroxyalkyl group, or an alkenyl group; or
- (CH₂)_{q2}(CO)ₚ₂O(AO)ₙ₂R^{7b} (3)
wherein AO represents an oxyalkylene group having 2 or more and 4 or less carbons;
q2 represents an integer of 0 or more and 6 or less;
p2 represents 0 or 1;
n2 represents the average number of added moles of AO, the number being 5 or more and 150 or less; and
R^{7b} represents a hydrogen atom or an alkyl group having 1 or more and 4 or less carbons.

15. The method for producing a clay-containing hydraulic composition according to claim 14, wherein X¹ and X² each represent a carbonyl group, q2 is 0, and p2 is 1.

16. The method for producing a clay-containing hydraulic composition according to claim 14 or 15, wherein Y is an alkyl group having 1 or more and 6 or less carbons.

17. Use of a dispersant in a clay-containing hydraulic composition, the dispersant comprising the following component (A):
<component (A)>
a copolymer comprising a constituent unit (A1) represented by the following general formula (A1), a constituent unit (A2) represented by the following general formula (A2), and a constituent unit (A3) represented by the following general formula (A3),
wherein the ratio of the content of the constituent unit (A1) to the total content of the constituent units (A1), (A2), and (A3), represented by: 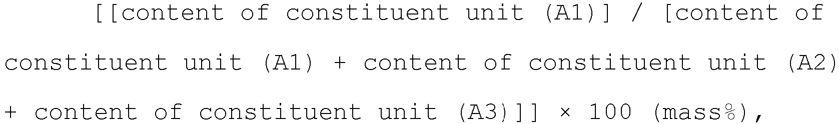 [[content of constituent unit (A1)] / [content of constituent unit (A1) + content of constituent unit (A2) + content of constituent unit (A3)]] × 100 (mass%), is 0.1 mass% or more and 4.5 mass% or less; and
the copolymer has a weight-average molecular weight of 10,000 or more and 100,000 or less: 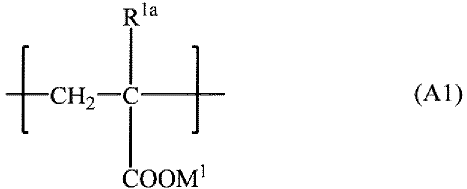 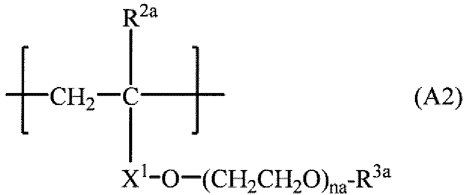 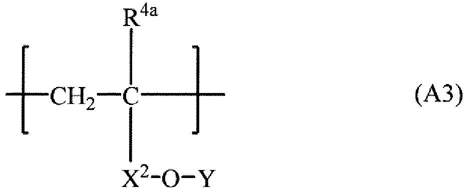
wherein R^{1a}, R^{2a}, and R^{4a} are the same or different, and each represent a hydrogen atom or a methyl group;
R^{3a} represents a hydrogen atom or an alkyl group having 1 or more and 3 or less carbons;
M¹ represents one or more selected from a hydrogen atom and a countercation;
X¹ and X² are the same or different, and each represent an alkylene group having 1 or more and 6 or less carbons, a direct bond, or a carbonyl group;
na represents the average number of added moles of oxyethylene groups (-CH₂CH₂O-), the number being 100 or more and 150 or less; and
Y represents an alkyl group having 1 or more and 6 or less carbons and/or a sulfo group.
